(19) Europäisches Patentamt / European Patent Office / Office européen des brevets

(11) **EP 4 729 569 A1**

(12) **EUROPEAN PATENT APPLICATION**
published in accordance with Art. 153(4) EPC

(43) Date of publication:
**22.04.2026 Bulletin 2026/17**

(51) International Patent Classification (IPC):
**C08J 5/18** (2006.01)

(21) Application number: **24823418.9**

(52) Cooperative Patent Classification (CPC):
**C08J 5/18**

(22) Date of filing: **12.06.2024**

(86) International application number:
**PCT/JP2024/021366**

(87) International publication number:
**WO 2024/257803 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.06.2023 JP 2023097939
14.06.2023 JP 2023097940
14.06.2023 JP 2023097941**

(71) Applicant: **Toyobo Co., Ltd.
Kita-ku
Osaka-shi, Osaka 530-0001 (JP)**

(72) Inventors:
• **HORINOUCHI, Kazuhito
Otsu-shi, Shiga 520-0292 (JP)**
• **IMAI, Toru
Inuyama-shi, Aichi 484-8508 (JP)**

(74) Representative: **Vossius & Partner
Patentanwälte Rechtsanwälte mbB
Siebertstraße 3
81675 München (DE)**

(54) **BIAXIALLY-ORIENTED POLYPROPYLENE FILM**

(57) It is provided that a biaxially-oriented polypropylene film that hardly shrinks in the width direction during temperature increase and at the end of the temperature increase, and that has a high storage elastic modulus. A biaxially-oriented polypropylene film, wherein in thermomechanical analysis, when temperature increase is performed at a temperature increase rate of 10°C/minute from 30°C to 160°C, a temperature at which a length of the biaxially-oriented polypropylene film in a width direction becomes $0.9950X_0$ or less where $X_0$ represents a value of the length in the width direction at 30°C is 129°C or more, a storage elastic modulus of the biaxially-oriented polypropylene film in a longitudinal direction at 23°C is 2.0 GPa or more, and a storage elastic modulus of the biaxially-oriented polypropylene film in the width direction at 23°C is 8.0 GPa or more.

[FIG. 1]

EP 4 729 569 A1

**Description**

TECHNICAL FIELD

The present invention relates to a biaxially-oriented polypropylene film.

BACKGROUND ART

Biaxially-oriented polypropylene films are excellent in physical properties such as stiffness and heat resistance, and thus have been used in a wide range of applications such as packaging applications and industrial applications.
For example, biaxially-oriented polypropylene films that can be used in packaging applications are disclosed in Patent Documents 1 to 3, and the biaxially-oriented polypropylene films are excellent in various physical properties. Specifically, the film of Patent Document 1 has low heat shrinkage force and has excellent Young's modulus. The film of Patent Document 2 has a low heat shrinkage rate and has excellent Young's modulus. The film of Patent Document 3 has low heat shrinkage force and has excellent stress at 5% elongation.

CITATION LIST

PATENT DOCUMENTS

Patent Document 1: International Publication No. 2020/196602
Patent Document 2: International Publication No. 2021/070671
Patent Document 3: International Publication No. 2020/137789

SUMMARY OF THE INVENTION

PROBLEMS TO BE SOLVED BY THE INVENTION

However, the films of Patent Documents 1 to 3 have a problem that, when the films are heated, the length in the width direction of the film significantly varies during temperature increase or at the end of the temperature increase, and thus, flatness is decreased due to heating. There is also a problem that, when a bag product is manufactured by using such a film, the bag product has poor appearance due to being heated during manufacture.
An object of the present invention is to provide a biaxially-oriented polypropylene film that hardly shrinks in the width direction during temperature increase and at the end of the temperature increase, and that has a high storage elastic modulus.

SOLUTION TO THE PROBLEMS

That is, the present invention includes the invention below.

[1] A biaxially-oriented polypropylene film, wherein in thermomechanical analysis, when temperature increase is performed at a temperature increase rate of 10°C/minute from 30°C to 160°C, a temperature at which a length of the biaxially-oriented polypropylene film in a width direction becomes $0.9950X_0$ or less where $X_0$ represents a value of the length in the width direction at 30°C is 129°C or more, a storage elastic modulus of the biaxially-oriented polypropylene film in a longitudinal direction at 23°C is 2.0 GPa or more, and a storage elastic modulus of the biaxially-oriented polypropylene film in the width direction at 23°C is 8.0 GPa or more.
[2] The biaxially-oriented polypropylene film according to the above [1], wherein a sum of the storage elastic modulus in the longitudinal direction at 23°C and a storage elastic modulus of the biaxially-oriented polypropylene film in the longitudinal direction at 140°C is 3.0 GPa or more, and a sum of the storage elastic modulus in the width direction at 23°C and a storage elastic modulus of the biaxially-oriented polypropylene film in the width direction at 140°C is 8.9 GPa or more.
[3] The biaxially-oriented polypropylene film according to the above [1] or [2], wherein a storage elastic modulus of the biaxially-oriented polypropylene film in the longitudinal direction at 120°C is 0.5 GPa or more, and a storage elastic modulus of the biaxially-oriented polypropylene film in the width direction at 120°C is 2.1 GPa or more.
[4] The biaxially-oriented polypropylene film according to any one of the above [1] to [3], wherein a heat shrinkage rate of the biaxially-oriented polypropylene film in the longitudinal direction at 120°C is 2.5% or less, and a heat shrinkage rate of the biaxially-oriented polypropylene film in the width direction at 120°C is 1.1% or less.

[5] The biaxially-oriented polypropylene film according to any one of the above [1] to [4], wherein a stress at 5% elongation of the biaxially-oriented polypropylene film in the width direction at 23°C is 150 MPa or more.

[6] The biaxially-oriented polypropylene film according to any one of the above [1] to [5], wherein a polypropylene resin composition constituting the biaxially-oriented polypropylene film has a mesopentad fraction of 97.0% or more.

[7] The biaxially-oriented polypropylene film according to any one of the above [1] to [6], wherein a polypropylene resin composition constituting the biaxially-oriented polypropylene film has a crystallization temperature of 105°C or more and a melting point of 158°C or more.

[8] The biaxially-oriented polypropylene film according to any one of the above [1] to [7], wherein a polypropylene resin composition constituting the biaxially-oriented polypropylene film has a melt flow rate of 4.0 g/10 minutes or more.

[9] The biaxially-oriented polypropylene film according to any one of the above [1] to [8], wherein a polypropylene resin composition constituting the biaxially-oriented polypropylene film contains 35% by mass or more of a component having a molecular weight of 100,000 or less.

[10] The biaxially-oriented polypropylene film according to any one of the above [1] to [9], wherein, in thermomechanical analysis, when temperature increase is performed at a temperature increase rate of 10°C/minute from 30°C to 130°C while the maximum value of the length in the width direction during the temperature increase is defined as $X_1$, and the minimum value of the length in the width direction during the temperature increase is defined as $X_2$, the percentage of $(X_1-X_0)/X_0$ is 0.20% or less and the percentage of $(X_2-X_0)/X_0$ is -0.50% or more.

[11] The biaxially-oriented polypropylene film according to any one of the above [1] to [10], wherein, in a dynamic viscoelasticity measurement, a minimum value of the loss elastic modulus at 25°C to 75°C is 0.26 GPa or more.

[12] The biaxially-oriented polypropylene film according to any one of the above [1] to [11], wherein, in a dynamic viscoelasticity measurement, when a maximum value the loss elastic modulus at -25°C to 25°C is defined as E" (A), a minimum value of the loss elastic modulus at 25°C to 75°C is defined as E" (B), a maximum value of the loss elastic modulus at 100°C to 160°C is defined as E" (C), E" (C)/E" (A) is 0.60 or more and E" (B)/E" (C) is 0.60 or more.

[13] The biaxially-oriented polypropylene film according to any one of the above [1] to [12], wherein a heat shrinkage rate of the biaxially-oriented polypropylene film in the longitudinal direction at 150°C is 4.5% or less, and a heat shrinkage rate of the biaxially-oriented polypropylene film in the width direction at 150°C is 9.0% or less.

EFFECTS OF THE INVENTION

The biaxially-oriented polypropylene film of the present invention hardly shrinks in the width direction during temperature increase and at the end of the temperature increase, and has a high storage elastic modulus, and thus, flatness is maintained even after the film has been heated. Therefore, the biaxially-oriented polypropylene film of the present invention can be suitably used for packaging, industries, and the like.

BRIEF DESCRIPTION OF THE DRAWINGS

[FIG. 1] FIG. 1 shows a relationship between temperature and the length of a film in the width direction in Example 4, Comparative Example 1, and Comparative Example 8.
[FIG. 2] FIG. 2 shows a relationship between temperature and loss elastic modulus in Example 4 and Comparative Example 1.
[FIG. 3] FIG. 3 shows a relationship between temperature and storage elastic modulus in Example 4 and Comparative Example 8.

DESCRIPTION OF EMBODIMENTS

A biaxially-oriented polypropylene film of the present invention is composed of a polypropylene resin composition.

(1-1) Polypropylene resin composition

The polypropylene resin composition constituting the biaxially-oriented polypropylene film of the present invention may be a mixture of two or more different kinds of polypropylene polymers (polypropylene resin), and for example, may be a mixture of two or more different kinds of polypropylene homopolymers, may be a mixture of two or more different kinds of polypropylene copolymers containing α-olefin other than propylene, or may be a mixture of one kind or two or more kinds of polypropylene homopolymers and one kind or two or more kinds of polypropylene copolymers containing α-olefin other than propylene.

In the following, various preferable physical properties of the polypropylene resin composition constituting the biaxially-oriented polypropylene film of the present invention will be described. When two or more different kinds of polypropylene polymers are used, the physical property value other than melt flow rate is a value obtained as a mass average of the physical properties of the polypropylene polymers.

The melting point (hereinafter, this may be referred to as "Tm") of the polypropylene resin composition constituting the biaxially-oriented polypropylene film of the present invention, is preferably 158 to 170°C, more preferably 159 to 169°C, further preferably 160 to 168°C, particularly preferably 161 to 167°C, and most preferably 162 to 166°C. When the melting point is 158°C or more, heat resistance at high temperature, flatness, stiffness, and the like are easily ensured. When the melting point is 170°C or less, cost increase is easily suppressed in polypropylene manufacturing, and breakage is less likely to occur during film formation.

The melting point of the polypropylene resin composition is the main peak temperature of an endothermic peak associated with melting and observed when: 5 mg of the polypropylene resin composition is put in an aluminum pan; the aluminum pan is set in a differential scanning calorimeter (DSC); under a nitrogen atmosphere, temperature increase is performed at a temperature increase rate of 20°C/minute from 30°C to 230°C; the temperature is maintained at 230°C for 5 minutes to melt the polypropylene resin composition; then, temperature decrease is performed at a temperature decrease rate of -10°C/minute, to 30°C; the temperature is maintained at 30°C for 5 minutes; and then temperature increase is performed at a temperature increase rate of 10°C/minute.

The crystallization temperature (hereinafter, this may be referred to as "Tc") of the polypropylene resin composition constituting the biaxially-oriented polypropylene film of the present invention, is preferably 105 to 135°C, more preferably 108 to 133°C, further preferably 110 to 132°C, still further preferably 112 to 130°C, particularly preferably 114 to 128°C, and most preferably 116 to 127°C. When the crystallization temperature is 105°C or more, crystallization easily proceeds during the stretching in the width direction and a subsequent cooling step, and thus, heat resistance at high temperature and stiffness are easily ensured. When the crystallization temperature is 135°C or less, cost increase is less likely to be realized in polypropylene manufacturing, and breakage is less likely to occur during film formation.

The crystallization temperature of the polypropylene resin composition is the main peak temperature of an exothermic peak that is observed when: 5 mg of the polypropylene resin composition is put in an aluminum pan; the aluminum pan is set in a DSC; under a nitrogen atmosphere, temperature increase is performed at a temperature increase rate of 20°C/minute from 30°C to 230°C; the temperature is maintained at 230°C for 5 minutes to melt the polypropylene resin composition; and then, temperature decrease is performed at a temperature decrease rate of -10°C/minute, to 30°C.

A crystal nucleating agent may be blended to the polypropylene resin composition, thereby increasing the melting point and the crystallization temperature of the polypropylene resin composition so as to be in the above range.

In the polypropylene resin composition constituting the biaxially-oriented polypropylene film of the present invention, the mesopentad fraction ([mmmm]%), which is the index of stereoregularity, is preferably 97.0 to 99.9%, more preferably 97.5 to 99.7%, and further preferably 98.0 to 99.5%. When the mesopentad fraction is less than 97.0%, a high degree of orientation may fail to be realized during stretching, or stiffness and heat resistance may be worsened since crystallization is inhibited. Meanwhile, when the mesopentad fraction is 97.0% or more, crystallinity of the polypropylene resin composition is enhanced, whereby the melting point, the degree of crystallinity, and the degree of crystal orientation of crystals in the film are improved, and heat resistance at high temperature, flatness, stiffness, and the like are easily ensured. When the mesopentad fraction is 99.9% or less, cost in polypropylene manufacturing is easily suppressed, and breakage is less likely to occur during film formation. The mesopentad fraction is measured by the nuclear magnetic resonance method (so-called NMR method). In order to cause the mesopentad fraction of the polypropylene resin composition to be in the range described above, a method such as washing a powder of the obtained polypropylene resin with a solvent such as n-heptane, or using an appropriate catalyst and/or co-catalyst may be used, for example.

When measured according to the condition M (230°C, 2.16 kgf) of JIS K 7210 (1995), the melt flow rate (MFR) of the polypropylene resin composition constituting the biaxially-oriented polypropylene film of the present invention, is preferably 4.0 to 30 g/10 minutes, more preferably 4.5 to 25 g/10 minutes, further preferably 4.8 to 22 g/10 minutes, still further preferably 5.0 to 20 g/10 minutes, particularly preferably 6.0 to 20 g/10 minutes, and most preferably 7.5 to 15 g/10 minutes. When the MFR of the polypropylene resin composition is 4.0 g/10 minutes or more, a biaxially-oriented polypropylene film that has a low heat shrinkage rate is easily obtained. When the MFR of the polypropylene resin composition is 30 g/10 minutes or less, formability of the film is easily maintained.

The amount of a component having a molecular weight of 100,000 or less in the GPC integration curve of the polypropylene resin composition constituting the biaxially-oriented polypropylene film of the present invention is preferably 35% by mass or more, more preferably 38 to 65% by mass, further preferably 40 to 60% by mass, particularly preferably 41 to 55% by mass, and most preferably 42 to 50% by mass. When the amount of the component having a molecular weight of 100,000 or less is 35% by mass or more, heat resistance is less likely to be decreased. When the amount of the component having a molecular weight of 100,000 or less is 65% by mass or less, film strength is less likely to be decreased. At this time, when a high-molecular-weight component or a long-chain branched component having a long relaxation time is contained, it is easy to adjust the amount of the component having a molecular weight of 100,000 or less contained in the polypropylene resin composition without significantly changing the overall viscosity. Therefore, it is easy to improve film formability without significantly affecting the physical properties such as flatness, stiffness, and heat resistance.

The polypropylene resin composition constituting the biaxially-oriented polypropylene film of the present invention has a polypropylene resin as a main component. However, as long as the effects of the present invention are not impaired, additives such as a resin other than the polypropylene resin, a heat stabilizer, an antioxidant, a UV absorber, a nucleating agent, an adhesive, an antifogging agent, a flame retardant, and an inorganic or organic filler that are known may be added to the polypropylene resin composition constituting the biaxially-oriented polypropylene film of the present invention.

However, it is preferable that the amounts of these additions are small. In the polypropylene resin composition constituting the biaxially-oriented polypropylene film of the present invention, the amount of the resin other than the polypropylene resin is preferably 10% by mass or less, more preferably 5% by mass or less, further preferably 2% by mass or less, and particularly preferably 1% by mass or less. In the polypropylene resin composition constituting the biaxially-oriented polypropylene film of the present invention, the amount of the additives other than the resin is preferably 10% by mass or less, more preferably 5% by mass or less, further preferably 2% by mass or less, and particularly preferably 1% by mass or less.

Examples of the resin other than the polypropylene resin include a polyolefin resin other than the polypropylene resin, various elastomers, and the like. These may be sequentially polymerized by using a multistage reactor, these may be blended with the polypropylene resin by a Henschel mixer, master pellets of these produced by using a melt-kneading machine in advance may be diluted with the polypropylene resin so as to have a predetermined concentration, or these may be melt-kneaded in the entire amount in advance and used.

(1-2) Polypropylene resin

The biaxially-oriented polypropylene film of the present invention is composed of a polypropylene resin composition having a polypropylene resin as a main component. "Main component" means that the proportion of the polypropylene resin in the polypropylene resin composition is 90% by mass or more, and the proportion is more preferably 93% by mass or more, further preferably 95% by mass or more, and particularly preferably 97% by mass or more. When two or more different kinds of polypropylene resins are contained in the polypropylene resin composition, it is preferable that the total content of the polypropylene resins in the polypropylene resin composition is in the above range.

As the polypropylene resin, which is the main component of the polypropylene resin composition constituting the biaxially-oriented polypropylene film of the present invention, a polypropylene homopolymer may be used, or a polypropylene copolymer containing $\alpha$-olefin other than propylene may be used. However, it is preferable to use a polypropylene polymer substantially containing no $\alpha$-olefin component other than propylene. Specifically, the "polypropylene polymer substantially containing no $\alpha$-olefin component other than propylene" is a polypropylene (co)polymer having a structural unit composed of 1 mol% or less of an $\alpha$-olefin component other than propylene and 99 mol% or more of propylene. Even when an $\alpha$-olefin component other than propylene is contained, the content (the total amount of ethylene and $\alpha$-olefin having 4 or more carbon atoms) of the $\alpha$-olefin component other than propylene is 1 mol% or less as described above, preferably 0.5 mol% or less, more preferably 0.3 mol% or less, further preferably 0.1 mol% or less, and particularly preferably 0 mol%. In the above range, crystallinity is easily improved.

Examples of the $\alpha$-olefin component having 4 or more carbon atoms include 1-butene, 1-pentene, 3-methyl-1-pentene, 3-methyl-1-butene, 1-hexene, 4-methyl-1-pentene, 5-ethyl-1-hexene, 1-octene, 1-decene, 1-dodecene, 1-tetradecene, 1-hexadecene, 1-heptadecene, 1-octadecene, 1-eicosene, and the like.

The polypropylene resin, which is the main component of the polypropylene resin composition constituting the biaxially-oriented polypropylene film of the present invention, may be a mixture of two or more different kinds of polypropylene polymers, and for example, may be a mixture of two or more different kinds of polypropylene homopolymers, may be a mixture of two or more different kinds of polypropylene copolymers containing $\alpha$-olefin other than propylene, or may be a mixture of one kind or two or more kinds of polypropylene homopolymers and one kind or two or more kinds of polypropylene copolymers containing $\alpha$-olefin other than propylene. In the case of a mixture of two or more different kinds of polypropylene polymers, it is preferable that the total content of the polypropylene polymers in the polypropylene resin composition is in the above range.

In the following, various preferable physical properties of the polypropylene resin, which is the main component of the polypropylene resin composition constituting the biaxially-oriented polypropylene film of the present invention, will be described. When two or more different kinds of polypropylene resins are used, the physical property value other than melt flow rate is a value obtained as a mass average of the physical properties of the polypropylene resins.

The melting point of the polypropylene resin, which is the main component of the polypropylene resin composition constituting the biaxially-oriented polypropylene film of the present invention, is preferably 158 to 170°C, more preferably 159 to 169°C, further preferably 160 to 168°C, particularly preferably 161 to 167°C, and most preferably 162 to 166°C. When the melting point is 158°C or more, heat resistance at high temperature, flatness, stiffness, and the like are easily ensured. When the melting point is 170°C or less, cost increase is easily suppressed in polypropylene manufacturing, and breakage is less likely to occur during film formation.

The melting point of the polypropylene resin is the main peak temperature of an endothermic peak associated with melting and observed when: 5 mg of the polypropylene resin is put in an aluminum pan; the aluminum pan is set in a differential scanning calorimeter (DSC); under a nitrogen atmosphere, temperature increase is performed at a temperature increase rate of 20°C/minute from 30°C to 230°C; the temperature is maintained at 230°C for 5 minutes to melt the polypropylene resin; then, temperature decrease is performed at a temperature decrease rate of -10°C/minute, to 30°C; the temperature is maintained at 30°C for 5 minutes; and then temperature increase is performed at a temperature increase rate of 10°C/minute.

The crystallization temperature of the polypropylene resin, which is the main component of the polypropylene resin composition constituting the biaxially-oriented polypropylene film of the present invention, is preferably 105 to 135°C, more preferably 108 to 133°C, further preferably 110 to 132°C, still further preferably 112 to 130°C, particularly preferably 114 to 128°C, and most preferably 116 to 127°C. When the crystallization temperature is 105°C or more, crystallization easily proceeds during the stretching in the width direction and a subsequent cooling step, and thus, heat resistance at high temperature and stiffness are easily ensured. When the crystallization temperature is 135°C or less, cost increase is less likely to be realized in polypropylene manufacturing, and breakage is less likely to occur during film formation.

The crystallization temperature of the polypropylene resin is the main peak temperature of an exothermic peak that is observed when: 5 mg of the polypropylene resin is put in an aluminum pan; the aluminum pan is set in a DSC; under a nitrogen atmosphere, temperature increase is performed at a temperature increase rate of 20°C/minute from 30°C to 230°C; the temperature is maintained at 230°C for 5 minutes to melt the polypropylene resin; and then, temperature decrease is performed at a temperature decrease rate of -10°C/minute, to 30°C.

If a crystal nucleating agent is blended to the polypropylene resin, the melting point and the crystallization temperature can be increased. When a crystal nucleating agent has been blended, it is preferable that the melting point and the crystallization temperature of the polypropylene resin in which the crystal nucleating agent is blended are in the above range.

In the polypropylene resin, which is the main component of the polypropylene resin composition constituting the biaxially-oriented polypropylene film of the present invention, the mesopentad fraction ([mmmm]%), which is the index of stereoregularity, is preferably 97.0 to 99.9%, more preferably 97.5 to 99.7%, and further preferably 98.0 to 99.5%. When the mesopentad fraction is less than 97.0%, a high degree of orientation may fail to be realized during stretching, or stiffness and heat resistance may be worsened since crystallization is inhibited. Meanwhile, when the mesopentad fraction is 97.0% or more, crystallinity of the polypropylene resin composition is enhanced, whereby the melting point, the degree of crystallinity, and the degree of crystal orientation of crystals in the film are improved, and heat resistance at high temperature, flatness, stiffness, and the like are easily ensured. When the mesopentad fraction is 99.9% or less, cost in polypropylene manufacturing is easily suppressed, and breakage is less likely to occur during film formation. The mesopentad fraction is measured by the nuclear magnetic resonance method (so-called NMR method). In order to cause the mesopentad fraction of the polypropylene resin to be in the range described above, a method such as washing a powder of the obtained polypropylene resin with a solvent such as n-heptane, or using an appropriate catalyst and/or co-catalyst may be used, for example.

When measured according to the condition M (230°C, 2.16 kgf) of JIS K 7210 (1995), the melt flow rate (MFR) of the polypropylene resin, which is the main component of the polypropylene resin composition constituting the biaxially-oriented polypropylene film of the present invention, is preferably 4.0 to 30 g/10 minutes, more preferably 4.5 to 25 g/10 minutes, further preferably 4.8 to 22 g/10 minutes, still further preferably 5.0 to 20 g/10 minutes, particularly preferably 6.0 to 20 g/10 minutes, and most preferably 7.5 to 15 g/10 minutes. When the MFR of the polypropylene resin is 4.0 g/10 minutes or more, a biaxially-oriented polypropylene film that has a low heat shrinkage rate is easily obtained. When the MFR of the polypropylene resin is 30 g/10 minutes or less, formability of the film is easily maintained.

(2) Method for forming biaxially-oriented polypropylene film

The biaxially-oriented polypropylene film of the present invention is preferably obtained by producing an unstretched sheet composed of the polypropylene resin composition having the polypropylene resin as a main component and by biaxially stretching the unstretched sheet. As the biaxial stretching, it is preferable that stretching is performed first in the longitudinal direction and then in the width direction. However, stretching may be performed first in the width direction and then in the longitudinal direction. Examples of the biaxial stretching method include an inflation simultaneous biaxial stretching method, a tenter simultaneous biaxial stretching method, a tenter sequential biaxial stretching method, and a tube stretching method. However, from the viewpoint of film formation stability and thickness uniformity, a tenter sequential biaxial stretching method is preferably adopted.

Hereinafter, a method for manufacturing the biaxially-oriented polypropylene film of the present invention will be described. In the following, a method in which the biaxially-oriented polypropylene film as a single layer is manufactured by using a tenter sequential biaxial stretching method will be described, but the method is not limited to the manufacturing method below.

First, the polypropylene resin composition is heated and melted by a single-screw or a twin-screw extruder, extruded into a sheet form from a T-die, and brought into contact with a cooling roll to be cooled and solidified, to obtain an unstretched sheet. Next, by the two pairs of stretching rolls having heated this unstretched sheet, the sheet is stretched in the longitudinal direction by increasing the number of rotations of the rear stretching rolls, to obtain a uniaxially stretched film. Subsequently, the uniaxially stretched film is heated in a preheating step, then stretched in the width direction while an end portion of the film is gripped by a tenter type stretching machine, heat-treated, and lastly cooled, whereby a biaxially-oriented polypropylene film can be obtained.

As necessary, at least one surface of the biaxially-oriented polypropylene film can be subjected to surface treatment and then wound by a winder, to obtain a film roll.

In the following, an extrusion step, a longitudinal-direction stretching step, a preheating step, a width-direction stretching step, a heat treatment step, and a cooling step will be described in this order.

<Extrusion step>

First, the polypropylene resin composition having the polypropylene resin as a main component is heated and melted in a range of 200°C to 300°C by a single-screw or twin-screw extruder, and the melt polypropylene resin composition in a sheet form is extruded from a T-die, adhered by an adhesion device such as an air knife to a metal-made cooling roll, and cooled and solidified, to obtain an unstretched sheet. The obtained unstretched sheet may further be put into a water tank.

The temperature of the cooling roll, or the temperatures of the cooling roll and the water tank are preferably 10°C or more and Tc°C or less. When the transparency of the film is to be increased, the sheet is preferably cooled and solidified by a cooling roll set at 10 to 50°C. When a propylene homopolymer having a mesopentad fraction of 97.0% or more is used, the cooling temperature is preferably 40°C or less from the viewpoint of facilitating stretching in the next step, and is more preferably 30°C or less from the viewpoint of reducing thickness unevenness. However, when the degree of crystal orientation after sequential biaxial stretching is to be increased, it may be preferable that the cooling temperature is 40°C or more.

From the viewpoint of cooling efficiency, the thickness of the unstretched sheet is preferably 3500 $\mu$m or less, and more preferably 3000 $\mu$m or less. The thickness of the unstretched sheet may be adjusted as appropriate according to the film thickness after the sequential biaxial stretching. The thickness of the unstretched sheet can be controlled on the basis of the extrusion speed of the polypropylene resin composition, the lip width of the T-die, and the like.

<Longitudinal-direction stretching step>

The stretching temperature in the longitudinal direction is preferably Tm-30 to Tm-7°C, more preferably Tm-27 to Tm-10°C, and further preferably Tm-25 to Tm-12°C. When the stretching temperature in the longitudinal direction is Tm-30°C or more, stretching in the width direction that is subsequently performed becomes easy, and the film thickness unevenness is also easily reduced. When the stretching temperature in the longitudinal direction is Tm-7°C or less, the heat shrinkage rate is easily reduced, so that the stretching does not become difficult due to adhesion to the stretching rolls, or the quality is less likely to be decreased due to an increase in surface roughness.

The stretching ratio in the longitudinal direction is preferably 3.5 to 8.0 times, more preferably 3.8 to 7.0 times, and further preferably 4.2 to 6.0 times. When the stretching ratio in the longitudinal direction is 3.5 times or more, strength is easily increased, and the film thickness unevenness is also easily reduced. When the stretching ratio in the longitudinal direction is 8.0 times or less, stretching in the width direction in the width-direction stretching step is easy, and the productivity is easily improved.

The stretching in the longitudinal direction may be performed in multiple stages of two or more stages by using three or more pairs of stretching rolls, but is preferably performed in one stage by using two pairs of stretching rolls. When stretching is performed in multiple stages, the highest stretching temperature is preferably in the above range.

<Preheating step>

It is preferable that the uniaxially stretched film after the stretching in the longitudinal direction is heated in a preheating step so that the polypropylene resin composition is sufficiently softened before the width-direction stretching step. The heating temperature in the preheating step is preferably Tm to Tm+25°C, more preferably Tm+2 to Tm+20°C, and further preferably Tm+3 to Tm+ 15°C. When the heating temperature in the preheating step is set to be the melting point or more, softening proceeds, and stretching in the width direction becomes easy. When the heating temperature in the preheating step is set to be Tm+25°C or less, orientation proceeds during stretching in the width direction, and stiffness is easily exhibited. When the preheating step includes a plurality of zones, the temperature in the zone having the highest temperature is used as the preheating temperature.

<Width-direction stretching step>

The stretching temperature in the width direction is preferably Tm-10°C or more and the heating temperature in the preheating step or less. When the stretching temperature in the width direction is Tm-10°C or more, the stiffness of the film that is obtained is easily improved. The stretching temperature in the width direction is more preferably Tm-9 to Tm+10°C, further preferably Tm-7 to Tm+7°C, and particularly preferably Tm-5 to Tm+5°C. When the stretching temperature in the width direction is Tm+10°C or less, stretching unevenness is less likely to occur.

In the width-direction stretching step, subsequently to the width-direction stretching step (hereinafter, this may be referred to as "former stretching step") in the temperature range above, a latter stretching step in which stretching is performed at a lower temperature may be added. When the latter stretching step is provided, the stiffness of the film is easily increased.

The stretching ratio in the width direction is preferably 10 to 20 times, more preferably 11 to 17 times, further preferably 12 to 15 times, and particularly preferably 12.5 to 15 times. When the stretching ratio in the width direction is 10 times or more, stiffness is easily increased, and the film thickness unevenness is also easily reduced. When the stretching ratio in the width direction is 20 times or less, the heat shrinkage rate is easily reduced, and breakage is less likely to occur during stretching.

When the latter stretching step is added, the total stretching ratio is preferably in the above range.

<Heat treatment step>

Heat treatment is performed after the width-direction stretching step has ended. Examples of a specific means for heat treatment include: a method in which a zone having a temperature higher than that in the stretching zone is provided after the stretching in the width direction; and a method in which the temperature of the zone in the latter half of the stretching is increased, and the film is caused to pass through the zone having the same temperature also after the stretching has ended, to raise the temperature of the film. Examples of the heating means include a method in which hot air is blown, and a method in which heating is performed using an infrared heater. However, the method is not particularly limited as long as the method increases the temperature of the film as compared with that at the end of the width-direction stretching step.

Preferably, the heat treatment step is performed immediately after (i.e., immediately after the stretching in the width direction has reached the final stretching ratio) the width-direction stretching step has ended. The temperature in the heat treatment step is preferably set to be a temperature higher than that at the end of the width-direction stretching step, and specifically, is preferably the stretching temperature in the width direction + 1°C or more. In addition, preferably, the heat treatment step is performed in two stages of a former heat treatment step and a latter heat treatment step. Preferably, in the former heat treatment step, heat treatment is performed at a temperature higher than that at the end of the width-direction stretching step, and in the latter heat treatment step, heat treatment is performed at a temperature lower than that in the former heat treatment step. In the following, the former heat treatment step and the latter heat treatment step will be described.

(Former heat treatment step)

The heating temperature in the former heat treatment step is preferably Tm to Tm+20°C, more preferably Tm+3 to Tm+18°C, further preferably Tm+4 to Tm+14°C, and particularly preferably Tm+5 to Tm+10°C. When heating is performed in the heat treatment step after the stretching step, the molecular chain orientation formed during the stretching is relaxed, and crystallization easily occurs in the latter heat treatment step. When heating is performed at a temperature lower than Tm°C, relaxation does not proceed, and thus, strong tension in the molecular chain remains, which may inhibit crystallization. Meanwhile, when heating is performed at a temperature higher than Tm+20°C, melting proceeds, and many of oriented molecular chains are relaxed, and thus, stiffness is likely to be decreased. The temperature can be gradually increased from the temperature at the end of the stretching in the width direction to the temperature during heating, but can also be increased stepwise or in one step. Increasing the temperature stepwise or in one step allows easy control of orientation of the molecular chain in the film, and thus is preferable.

In the former heat treatment step, the film may or may not be relaxed in the width direction. Specifically, the relaxation rate is preferably 0 to 3%, more preferably 0 to 1%, and further preferably 0% (not relaxed). When the relaxation rate is in the above range, stiffness is less likely to be decreased, and the film thickness variation is easily reduced. When the relaxation rate is higher than 3%, many of oriented molecular chains are relaxed, and thus, stiffness is likely to be decreased. When stiffness is to be increased more, relaxation need not necessarily be performed. As long as the effects of the present invention are not impaired, the film may be slightly expanded so as to inhibit sagging of the film and the like.

(Latter heat treatment step)

The heating temperature in the latter heat treatment step is preferably Tm-70 to Tm°C, more preferably Tm-50 to Tm-1°C, further preferably Tm-40 to Tm-2°C, and particularly preferably Tm-30 to Tm-3°C. When heat treatment is performed at a temperature higher than Tm°C, crystallization does not proceed and the heat shrinkage rate is less likely to be decreased. Meanwhile, when heat treatment is performed at a temperature lower than Tm-70°C, lamella thickening does not proceed, and the melting point of the film is less likely to be increased. That is, heat resistance at high temperature is impaired.

In the latter heat treatment step, in order to adjust the heat shrinkage rate, the film may be relaxed in the width direction. In relaxation, the relaxation rate is preferably 1 to 8%, more preferably 2 to 6%, and further preferably 3 to 5%, but the film need not necessarily be relaxed. In the above range, stiffness is less likely to be decreased, and the film thickness variation is easily reduced. However, when stiffness is to be increased more, the film need not necessarily be relaxed.

In the width-direction stretching step, molecular chains are oriented due to the stretching, but strong entanglement remains, and thus, the molecular chains are in a state of being excessively restrained. If the heat treatment step is performed in this state, since there are many molecular chains that are excessively restrained in association with the entanglement, the degree of crystallinity is less likely to be increased, and further, increase in the thickness of the lamella in the crystal part is less likely to occur, so that the crystal part that melts at a lower temperature is formed, and thus, sufficient heat resistance cannot be exhibited at high temperature. Therefore, in a conventional film formation process, in order to eliminate entanglement of the molecular chains after stretching in the width direction, the film is subjected to several % to several ten % of relaxation in the heat treatment step, to promote crystallization. However, due to the relaxation, orientation of the molecular chains generated in the width-direction stretching step is decreased, resulting in decreased stiffness of the film, and thus, in the conventional film formation process, it is difficult to attain both of heat resistance and stiffness. In addition, there is also a problem that, when heat treatment is performed at high temperature, melting excessively proceeds, whereby the film is whitened.

In order to solve this problem, it is preferable that, immediately after the width-direction stretching step has ended, heat treatment at a relaxation rate of 3% or less is performed at a temperature higher than that in the stretching in the width direction, such that orientation of molecular chains is allowed to remain while restraint of molecular chains due to excessive entanglement is eliminated. When this heat treatment step has been performed, there are fewer molecular chains that are restrained in association with entanglement of the molecular chains, and thus, the degree of crystallinity is increased, the thickness of the lamella in the crystal part is easily increased, and sufficient heat resistance can be exhibited at high temperature.

When the amount of a low-molecular-weight polypropylene component in the polypropylene resin composition constituting the biaxially-oriented polypropylene film is increased, entanglement of the molecular chains can be further reduced. Accordingly, the heat shrinkage stress in the part other than the lamella in the crystal part is weakened, and the heat shrinkage rate can be further decreased, which is preferable.

(Cooling step)

It is preferable that the film is cooled immediately after the heat treatment step. The cooling temperature is preferably set to be 10°C or more and 140°C or less, more preferably 15°C or more and 135°C or less, further preferably 20°C or more and 130°C or less, particularly preferably 20°C or more and 80°C or less, and most preferably 20°C or more and 50°C or less. When the cooling step is provided, the state of the molecular orientation in the film can be fixed.

The manufacturing method when the biaxially-oriented polypropylene film of the present invention is a single layer has been described above. However, in the biaxially-oriented polypropylene film of the present invention, at least one surface may have laminated thereon a layer (hereinafter, referred to as "function layer") having another function. The function layer may be laminated on only one surface, or may be laminated on both surfaces. When a resin is contained in the function layer, the polypropylene resin constituting the biaxially-oriented polypropylene film may be used as the resin, or a resin other than the polypropylene resin constituting the biaxially-oriented polypropylene film may be used.

The number of the function layers to be laminated may be one, two, three, or more per surface, but is preferably one or two from the viewpoint of ease of manufacture. The method for lamination is not particularly limited, and for example, coextrusion by a feed block method or a multi-manifold method is preferable. On the premise of not impairing the effects of the present invention, in order to improve the processability of the biaxially-oriented polypropylene film, a resin layer having heat sealability can be laminated as the function layer. In addition, in order to impart printability, corona treatment can also be performed on one surface or both surfaces of the film.

The biaxially-oriented polypropylene film of the present invention can be formed as a film roll having a width of 2000 to 12000 mm and a length of about 1000 to 50000 m by being wound into a roll shape, and can be obtained as a long film roll. In addition, the biaxially-oriented polypropylene film may be slit according to each application, to be obtained as a slit roll having a width of 300 to 2000 mm and a length of about 500 to 5000 m.

(3) Physical property of biaxially-oriented polypropylene film

The biaxially-oriented polypropylene film of the present invention preferably has the following characteristics. Here, the "longitudinal direction (MD direction)" of the biaxially-oriented polypropylene film of the present invention is a direction corresponding to the flow direction in the film manufacturing step, and the "width direction (TD direction)" is a direction orthogonal to the flow direction in the film manufacturing step. The same applies to the description below.

For a polypropylene film for which a flow direction in a film manufacturing step is unknown, a direction in which the diffraction intensity of a diffraction intensity distribution obtained when wide-angle X-rays are incident on the film surface in a direction perpendicular thereto and a scattering peak derived from the (110) plane of $\alpha$-type crystal is scanned in the circumferential direction, is the largest, is defined as the "longitudinal direction", and a direction orthogonal to this direction is defined as the "width direction".

<Length in width direction>

In thermomechanical analysis, when temperature increase is performed at a temperature increase rate of 10°C/minute from 30°C to 130°C while the length of the biaxially-oriented polypropylene film of the present invention in the width direction at 30°C is defined as $X_0$, the maximum value of the length in the width direction during the temperature increase is defined as $X_1$, and the minimum value of the length in the width direction during the temperature increase is defined as $X_2$, the percentage of $(X_1-X_0)/X_0$ is preferably 0.20% or less, more preferably 0.19% or less, further preferably 0.18% or less, particularly preferably 0.17% or less, and most preferably 0.16% or less. When the percentage of $(X_1-X_0)/X_0$ is 0.20% or less, deformation of the film can be inhibited even after the film has been heated at high temperature such as during heating processing using rolls, during printing, and during heat sealing. Therefore, the flatness of the film is less likely to be deteriorated, and in addition, the processability of the film can be improved. In addition, a printing pitch shift is less likely to occur when printing ink at high temperature is transferred during printing. The smaller the $(X_1-X_0)/X_0$ is, the more preferable, and the lower limit is not particularly limited, but is 0.01% or more, for example, and preferably 0.02% or more due to technological difficulty.

the percentage of $(X_2-X_0)/X_0$ is preferably -0.50% or more, more preferably -0.45% or more, further preferably -0.40% or more, particularly preferably -0.35% or more, and most preferably -0.30% or more. When the percentage of $(X_2-X_0)/X_0$ is -0.50% or more, deformation of the film can be inhibited even after the film has been heated at high temperature such as during heating processing using rolls, during printing, and during heat sealing. Therefore, the flatness of the film is less likely to be deteriorated, and in addition, the processability of the film can be improved. The larger the $(X_2-X_0)/X_0$ is, the more preferable, and the upper limit is not particularly limited, but is 0.00% or less, for example.

In thermomechanical analysis, when temperature increase is performed at a temperature increase rate of 10°C/minute from 30°C to 160°C, the temperature (temperature at 0.5% shrinkage) at which the length of the biaxially-oriented polypropylene film of the present invention in the width direction becomes $0.9950X_0$ or less is 129°C or more, preferably 130°C or more, more preferably 131°C or more, further preferably 132°C or more, and particularly preferably 133°C or more. The "temperature at which the length in the width direction becomes $0.9950X_0$ or less" means the lowest temperature among temperatures at which the length in the width direction becomes $0.9950X_0$ or less when temperature increase is performed at a temperature increase rate of 10°C/minute from 30°C to 160°C. When the temperature at which the length in the width direction becomes $0.9950X_0$ or less is 129°C or more, deformation of the film can be inhibited even after the film has been heated at high temperature such as during heating processing using rolls, during printing, and during heat sealing. Therefore, the flatness of the film is less likely to be deteriorated, and in addition, the processability of the film can be improved. The higher the temperature at which the length in the width direction becomes $0.9950X_0$ or less, the more preferable, and the upper limit is not particularly limited, but is 160°C or less, for example, and preferably 156°C or less. When the temperature is 160°C or less, practical manufacture is facilitated, and transparency is easily maintained. When the length in the width direction does not become $0.9950X_0$ or less even once even after the temperature increase from 30°C to 160°C, it is determined that the temperature at 0.5% shrinkage exceeds 160°C.

<Loss elastic modulus>

The loss elastic modulus was obtained by dynamic viscoelasticity measurement. Specifically, temperature increase was performed at a temperature increase rate of 5°C/minute from -60°C to 160°C in a nitrogen atmosphere with a measurement load of 10 g at a frequency of 10 Hz, to measure the loss elastic modulus at each temperature during the temperature increase.

In the following, parameters regarding five loss elastic moduli, i.e., a maximum value E" (A) of the loss elastic modulus at -25°C to 25°C, a minimum value E" (B) of the loss elastic modulus at 25°C to 75°C, a maximum value E" (C) of the loss elastic modulus at 100°C to 160°C, E" (C)/E" (A), and E" (B)/E" (C), will be described. In the present specification, simple citations of "loss elastic modulus" all refer to "loss elastic modulus" in the width direction.

[Maximum value E" (A) of loss elastic modulus at -25°C to 25°C]

Motowo TAKAYANAGI, "Kesshousei Koubunshi no Ondo Bunsan (provisional translation: Temperature Dispersion of Crystalline Polymers)": KOUBUNSHI, The Society of Polymer Science, Japan, 1961, Vol. 10, No. 3, pp. 289 to 295 indicates that, in a polypropylene film, relaxation (primary dispersion) due to micro-Brownian motion of the main chain occurs at - 25°C to 25°C, and that the loss elastic modulus at -25°C to 25°C increases in accordance with increase in the orientation degree due to stretching. The present inventors found that, when a highly stereoregular polypropylene is used and the above-described width-direction stretching step is adopted, the orientation degree in the film can be increased, i.e., the value of the loss elastic modulus at -25°C to 25°C can be increased.

E" (A) is preferably 0.40 GPa or more, more preferably 0.42 GPa or more, further preferably 0.44 GPa or more, particularly preferably 0.46 GPa or more, and most preferably 0.48 GPa or more. When E" (A) is 0.40 GPa or more, the stiffness is likely to be high. The upper limit of E" (A) is not particularly limited, but is 0.70 GPa or less, for example, and preferably 0.60 GPa or less, as a practical value.

[Minimum value E" (B) of loss elastic modulus at 25°C to 75°C]

Motowo TAKAYANAGI, "Kesshousei Koubunshi no Ondo Bunsan (provisional translation: Temperature Dispersion of Crystalline Polymers)": KOUBUNSHI, The Society of Polymer Science, Japan, 1961, Vol. 10, No. 3, pp. 289 to 295 indicates the following. That is, when the degree of crystallinity in a film that significantly contributes to heat resistance is increased, and the number of crystals that melt in a region (hereinafter, referred to as "low temperature region") having a relatively low temperature being the glass transition point temperature or more of a polypropylene resin is reduced, relaxation associated with melting is less likely to occur, and under the influence thereof, relaxation of the amorphous part is also inhibited (even if treated at high temperature, mobility of the amorphous part is reduced and heat resistance becomes good). The present inventors found that, when a highly stereoregular polypropylene is used and the above-described width-direction stretching step is adopted, the number of crystals that melt in the above low temperature region can be reduced, and variation in the loss elastic modulus from the glass transition point temperature to 75°C is reduced.

E" (B) is preferably 0.26 GPa or more, more preferably 0.27 GPa or more, further preferably 0.28 GPa or more, particularly preferably 0.29 GPa or more, and most preferably 0.30 GPa or more. When E" (B) is 0.26 GPa or more, heat shrinkage rate is likely to be lowered. In addition, when E" (B) is 0.26 GPa or more, the number of crystals that melt in the low temperature region is small, as a result, flatness can be increased. The upper limit of E" (B) is not particularly limited, but is 0.60 GPa or less, for example, and preferably 0.50 GPa or less, as a practical value.

[Maximum value E" (C) of loss elastic modulus at 100°C to 160°C]

Motowo TAKAYANAGI, "Kesshousei Koubunshi no Ondo Bunsan (provisional translation: Temperature Dispersion of Crystalline Polymers)": KOUBUNSHI, The Society of Polymer Science, Japan, 1961, Vol. 10, No. 3, pp. 289 to 295 indicates that, when the temperature of a polypropylene stretched film is increased and the loss elastic modulus at each temperature is measured, a peak derived from crystalline dispersion appears at 100°C or more. This peak in the crystalline dispersion is considered to be derived from increase in interplanar frictional viscosity of the crystal structure, and the increase occurs when the film is stretched at an optimum temperature during film formation. Increase in the frictional viscosity indicates that stress transmission in the crystalline phase is strong, and is considered to correlate with increase in stiffness. From the above, the present inventors found that, when a highly stereoregular polypropylene is used and the above-described width-direction stretching step is adopted, the maximum value of the loss elastic modulus at 100°C or more is increased.

E" (C) is preferably 0.28 to 0.80 GPa, more preferably 0.29 to 0.75 GPa, further preferably 0.30 to 0.70 GPa, particularly preferably 0.31 to 0.65 GPa, and most preferably 0.32 to 0.60 GPa. When E" (C) is 0.28 GPa or more, the stiffness is high, and thus, a bag shape when the film made into a packaging bag is easily maintained, and the film is less likely to be deformed during processing such as printing. When E" (C) is 0.80 GPa or less, practical manufacture is facilitated or the film is less likely to be torn in the width direction.

E" (C)/E" (A) is preferably 0.60 to 1.30, more preferably 0.62 to 1.20, further preferably 0.64 to 1.10, particularly preferably 0.66 to 1.00, and most preferably 0.68 to 0.90. When E" (C)/E" (A) is 0.60 or more, the stiffness is high, and thus, a bag shape when the film made into a packaging bag is easily maintained, and the film is less likely to be deformed during processing such as printing. When E" (C)/E" (A) is 1.30 or less, practical manufacture is facilitated or the film is less likely to be torn in the width direction.

E" (B)/E" (C) is preferably 0.60 to 1.30, more preferably 0.61 to 1.25, further preferably 0.62 to 1.20, particularly preferably 0.63 to 1.15, and most preferably 0.64 to 1.10. When E" (B)/E" (C) is 0.60 or more, the number of crystals that melt in the low temperature region is small. Thus, relaxation associated with melting is less likely to occur, and under the influence thereof, relaxation of the amorphous part is also inhibited, and as a result, mobility of the amorphous part is reduced even if treated at high temperature, and flatness and heat resistance can be increased. When E" (B)/E" (C) is 1.30 or less, stiffness is less likely to be decreased, and film thickness variation is easily reduced.

<Storage elastic modulus>

The storage elastic modulus was obtained by dynamic viscoelasticity measurement. Specifically, temperature increase was performed at a temperature increase rate of 5°C/minute from -60°C to 160°C in a nitrogen atmosphere with a measurement load of 10 g at a frequency of 10 Hz, to measure the storage elastic modulus at each temperature during the temperature increase.

The storage elastic modulus of the biaxially-oriented polypropylene film of the present invention in the longitudinal direction at 23°C is 2.0 GPa or more, preferably 2.0 to 5.0 GPa, more preferably 2.3 to 4.5 GPa, further preferably 2.5 to 4.3 GPa, particularly preferably 2.8 to 4.2 GPa, and most preferably 3.0 to 4.0 GPa.

The storage elastic modulus of the biaxially-oriented polypropylene film of the present invention in the width direction at 23°C is 8.0 GPa or more, preferably 8.0 to 15.0 GPa, more preferably 8.2 to 14.0 GPa, further preferably 8.4 to 13.5 GPa, and particularly preferably 8.6 to 13.0 GPa.

When the storage elastic modulus at 23°C in the longitudinal direction and the width direction is in the above range, the strength of the biaxially-oriented polypropylene film is significantly increased, and the stiffness and the strength can be maintained even when the film is thin, so that such a storage elastic modulus can significantly contribute to reduction of the volume of the film. Further, the flatness of the film is less likely to be deteriorated, and in addition, the processability of the film can be improved.

The storage elastic modulus of the biaxially-oriented polypropylene film of the present invention in the longitudinal direction at 120°C is preferably 0.5 to 2.5 GPa, more preferably 0.6 to 2.3 GPa, further preferably 0.7 to 2.1 GPa, and particularly preferably 0.8 to 2.0 GPa. When the storage elastic modulus in the longitudinal direction at 120°C is in the above range, the strength at high temperature is easily increased, and a printing pitch shift is less likely to occur when printing ink at high temperature is transferred during printing.

The storage elastic modulus of the biaxially-oriented polypropylene film of the present invention in the width direction at 120°C is preferably 2.1 to 8.0 GPa, more preferably 2.2 to 7.8 GPa, further preferably 2.3 to 7.6 GPa, and particularly preferably 2.4 to 7.4 GPa. When the storage elastic modulus in the width direction at 120°C is in the above range, the strength at high temperature is easily increased, and a printing pitch shift is less likely to occur when printing ink at high temperature is transferred during printing. Further, the flatness of the film is less likely to be deteriorated, and in addition, the processability of the film can be improved.

The storage elastic modulus of the biaxially-oriented polypropylene film of the present invention in the longitudinal direction at 140°C is preferably 0.3 to 1.5 GPa, more preferably 0.35 to 1.45 GPa, further preferably 0.4 to 1.4 GPa, and particularly preferably 0.45 to 1.35 GPa.

The storage elastic modulus of the biaxially-oriented polypropylene film of the present invention in the width direction at 140°C is preferably 1.3 to 5.0 GPa, more preferably 1.35 to 4.6 GPa, further preferably 1.4 to 4.2 GPa, and particularly preferably 1.45 to 3.8 GPa.

When the storage elastic modulus in the longitudinal direction and the width direction at 140°C is in the above range, the strength at high temperature is easily increased, and a printing pitch shift is less likely to occur when printing ink at high temperature is transferred during printing. Further, the flatness of the film is less likely to be deteriorated, and in addition, the processability of the film can be improved.

The storage elastic modulus of the biaxially-oriented polypropylene film of the present invention in the longitudinal direction at 150°C is preferably 0.1 to 1.0 GPa, more preferably 0.15 to 0.9 GPa, further preferably 0.2 to 0.8 GPa, and particularly preferably 0.25 to 0.7 GPa.

The storage elastic modulus of the biaxially-oriented polypropylene film of the present invention in the width direction at 150°C is preferably 0.85 to 2.5 GPa, more preferably 0.9 to 2.4 GPa, further preferably 0.95 to 2.3 GPa, and particularly preferably 1.0 to 2.2 GPa.

When the storage elastic modulus in the longitudinal direction and the width direction at 150°C is in the above range, the strength at high temperature is easily increased, and a printing pitch shift is less likely to occur when printing ink at high temperature is transferred during printing. Further, the flatness of the film is less likely to be deteriorated, and in addition, the processability of the film can be improved.

A sum of the storage elastic modulus of the biaxially-oriented polypropylene film of the present invention in the longitudinal direction at 23°C and the storage elastic modulus of the biaxially-oriented polypropylene film of the present invention in the longitudinal direction at 140°C is preferably 3.0 to 8.0 GPa, more preferably 3.1 to 7.5 GPa, further preferably 3.2 to 7.0 GPa, and particularly preferably 3.3 to 6.5 GPa.

A sum of the storage elastic modulus of the biaxially-oriented polypropylene film of the present invention in the width direction at 23°C and the storage elastic modulus of the biaxially-oriented polypropylene film of the present invention in the width direction at 140°C is preferably 8.9 to 19.0 GPa, more preferably 9.2 to 18.0 GPa, further preferably 9.8 to 17.0 GPa, and particularly preferably 10.0 to 16.0 GPa.

With regard to the longitudinal direction and the width direction, when the sum of the storage elastic modulus of the biaxially-oriented polypropylene film of the present invention at 23°C and the storage elastic modulus of the biaxially-oriented polypropylene film of the present invention at 140°C is in the above range, the strength at high temperature is easily increased, and a printing pitch shift is less likely to occur when printing ink at high temperature is transferred during printing. Further, the flatness of the film is less likely to be deteriorated, and in addition, the processability of the film can be improved.

<Thickness>

The thickness of the biaxially-oriented polypropylene film of the present invention may be set as appropriate according to the application and is not particularly limited, but is preferably 2 to 100 $\mu$m, more preferably 3 to 80 $\mu$m, further preferably 4 to 60 $\mu$m, particularly preferably 8 to 50 $\mu$m, and most preferably 10 to 40 $\mu$m. When the thickness is 2 $\mu$m or more, the stiffness of the film is easily ensured, and as a result, the strength of the film is easily ensured. When the thickness is 100 $\mu$m or less, the cooling rate of the unstretched sheet during the extrusion step is less likely to be decreased.

<Stress at 5% elongation (F5)>

The stress at 5% elongation (F5) of the biaxially-oriented polypropylene film of the present invention in the longitudinal direction at 23°C is preferably 40 to 70 MPa, more preferably 42 to 65 MPa, further preferably 46 to 62 MPa, and particularly preferably 48 to 60 MPa. When the stress at 5% elongation (F5) is 40 MPa or more, the stiffness is high, and thus, a bag shape when the film made into a packaging bag is easily maintained, and the film is less likely to be deformed during processing such as printing. When the stress at 5% elongation (F5) is 70 MPa or less, practical manufacture is facilitated, and the balance between the longitudinal direction and the width direction is easily improved. F5 in the longitudinal direction can be set to be in the above range by adjusting the stretching ratio or the relaxation rate, or adjusting the temperature during film formation.

The stress at 5% elongation (F5) of the biaxially-oriented polypropylene film of the present invention in the width direction at 23°C is preferably 150 to 280 MPa, more preferably 152 to 250 MPa, further preferably 154 to 230 MPa, particularly preferably 156 to 210 MPa, and most preferably 158 to 200 MPa. When the stress at 5% elongation (F5) is 150 MPa or more, the stiffness is high, and thus, a bag shape when the film made into a packaging bag is easily maintained, and the film is less likely to be deformed during processing such as printing. When the stress at 5% elongation (F5) is 280 MPa or less, practical manufacture is facilitated or the film is less likely to be torn in the width direction. F5 in the width direction can be set to be in the above range by adjusting the stretching ratio or the relaxation rate, or adjusting the temperature during film formation.

<Heat shrinkage rate>

The heat shrinkage rate of the biaxially-oriented polypropylene film of the present invention in the longitudinal direction at 120°C is preferably 2.5% or less, more preferably 2.0% or less, further preferably 1.7% or less, and particularly preferably 1.5% or less. When the heat shrinkage rate in the longitudinal direction at 120°C is 2.5% or less, a printing pitch shift is less likely to occur when printing ink is transferred. The heat shrinkage rate in the longitudinal direction at 120°C is preferably low, and the lower limit is not particularly limited, but, for example, is 0.1% or more and preferably 0.3% or more due to technological difficulty. The heat shrinkage rate in the longitudinal direction at 120°C can be set to be in the above range by adjusting the stretching ratio, the stretching temperature, and the heat treatment temperature.

The heat shrinkage rate of the biaxially-oriented polypropylene film of the present invention in the width direction at 120°C is preferably 1.1% or less, more preferably 1.0% or less, further preferably 0.7% or less, particularly preferably 0.5% or less, and most preferably 0.3% or less. When the heat shrinkage rate in the width direction at 120°C is 1.1% or less, wrinkles are less likely to occur during heat sealing. The lower limit of the heat shrinkage rate in the width direction at 120°C is not particularly limited, but, for example, is -0.2% or more. The heat shrinkage rate in the width direction at 120°C can be set to be in the above range by adjusting the stretching ratio, the stretching temperature, and the heat treatment temperature.

The heat shrinkage rate of the biaxially-oriented polypropylene film of the present invention in the longitudinal direction at 150°C is preferably 10% or less, more preferably 7.0% or less, further preferably 6.0% or less, particularly preferably 4.5% or less, and most preferably 4.0% or less. When the heat shrinkage rate in the longitudinal direction at 150°C is 10% or less, a printing pitch shift is less likely to occur when printing ink is transferred. The heat shrinkage rate in the longitudinal direction at 150°C is preferably low, and the lower limit is not particularly limited, but, for example, is 0.1% or more and preferably 0.5% or more due to technological difficulty. The heat shrinkage rate in the longitudinal direction at 150°C can be set to be in the above range by adjusting the stretching ratio, the stretching temperature, and the heat treatment temperature.

The heat shrinkage rate of the biaxially-oriented polypropylene film of the present invention in the width direction at 150°C is preferably 20% or less, more preferably 15% or less, further preferably 12% or less, particularly preferably 10% or less, and most preferably 9.0% or less. When the heat shrinkage rate in the width direction at 150°C is 20% or less, wrinkles are less likely to occur during heat sealing. The lower limit of the heat shrinkage rate in the width direction at 150°C is not particularly limited, but, for example, is 0% or more, and preferably 1% or more. The heat shrinkage rate in the width direction at 150°C can be set to be in the above range by adjusting the stretching ratio, the stretching temperature, and the heat treatment temperature.

When the heat shrinkage rate in the longitudinal direction at 150°C is 10% or less and the heat shrinkage rate in the width direction at 150°C is 20% or less, wrinkles are less likely to occur during heat sealing. In particular, when the heat shrinkage rate in the longitudinal direction at 150°C is 8.0% or less and the heat shrinkage rate in the width direction at 150°C is 15% or less, if the film is made into a packaging bag to be used, the strain when a zip seal is fused to an opening portion of the bag is small, which is preferable. To decrease the heat shrinkage rate at 150°C, it is effective to set the amount of the component having a molecular weight of 100,000 or less when a gel permeation chromatography (GPC) integration curve of the polypropylene resin composition constituting the film is measured, to be 35% by mass or more.

<Thickness uniformity>

The lower limit of the thickness uniformity of the biaxially-oriented polypropylene film of the present invention is preferably 0%, more preferably 0.1%, further preferably 0.5%, and particularly preferably 1%. The upper limit of the thickness uniformity is preferably 20%, more preferably 17%, further preferably 15%, particularly preferably 12%, and most preferably 10%. When the thickness uniformity is in the above range, defects are less likely to occur during post-processing such as coating and printing, and the biaxially-oriented polypropylene film is easily used for applications that require precision.

The measurement method was as follows. A test piece of 40 mm in the width direction was cut out from a steady region where the physical properties of the film were stable in the length direction of the film, and the film thickness was continuously measured over 20000 mm using a film feeder manufactured by MIKURON k.k. (using the serial number: A90172) and a film thickness continuous measurement device (product name: K-313A wide-range high sensitivity electronic micrometer) manufactured by ANRITSU CORPORATION, and the thickness uniformity was calculated form the following formula.

Thickness uniformity (%) = [(maximum value of thickness - minimum value of thickness) / average value of thickness] × 100

The biaxially-oriented polypropylene film of the present invention has little shrinkage in the entire temperature range from room temperature to 130°C, and a high storage elastic modulus at 23°C. Therefore, deformation of the film can be inhibited even after heating has been performed at high temperature such as during heating processing using rolls, during printing, and during heat sealing, the flatness of the film is less likely to be deteriorated, and in addition, the processability of the film can be improved. In addition, the film can be made still thinner, which can contribute to reduction of the volume of a packaging material.

From the above, in the case where the biaxially-oriented polypropylene film of the present invention is used, when the film is made into a packaging bag, the bag shape is easily maintained, deformation of the film is less likely to occur during processing such as heat sealing at high temperature, and a printing pitch shift is less likely to occur during printing. Thus, the biaxially-oriented polypropylene film of the present invention is suitable for packaging. In addition, even after a silicone release agent has been applied to the biaxially-oriented polypropylene film and the resultant matter is heated and dried, the flatness is less likely to be lost, and thus, the biaxially-oriented polypropylene film is suitable as a release film which is required to have a high degree of flatness such as in an optical application and the like.

To form a bag for packaging food, a pre-made bag is filled with contents and heated to melt and fuse the film, thereby hermetically sealing the bag. In many cases, the same procedure is also performed when making a bag while filling the bag with food. Usually, a sealant film composed of a polyethylene resin, a polypropylene resin, or the like is laminated on a base film (the biaxially-oriented polypropylene film of the present invention), and the sealant film surfaces are fused to each other. As for a heating method, pressure is applied from the base film side with a heating plate to hold the film to seal the film, but the sealing width is often about 10 mm. At this time, the base film is also heated, and the expansion and contraction at that time cause wrinkles. For the durability of the bag, it is better to have fewer wrinkles, and in order to increase purchasing motivation, it is also better to have fewer wrinkles. The sealing temperature may be about 120°C, but in order to increase the bag-making processing speed, the sealing temperature is required to be higher. Even in this case, the expansion and contraction are preferably small. In the case of fusing a zip seal to the opening portion of the bag, sealing at a higher temperature is required.

(4) Others

The biaxially-oriented polypropylene film of the present invention can be printed by letterpress printing, lithographic printing, intaglio printing, stencil printing, or transfer printing, depending on the application.

Moreover, an unstretched sheet, a uniaxially stretched film, or a biaxially stretched film each composed of a low-density polyethylene, a linear low-density polyethylene, an ethylene-vinyl acetate copolymer, polypropylene, or polyester can be attached as a sealant film to the biaxially-oriented polypropylene film of the present invention, whereby the biaxially-oriented polypropylene film can be used as a laminated body having heat sealability.

In the case of enhancing the gas barrier properties and heat resistance, an aluminum foil, an unstretched sheet, a uniaxially stretched film, or a biaxially stretched film can be provided as an intermediate layer between the biaxially-oriented polypropylene film of the present invention and the sealant film. The raw material constituting the unstretched sheet, the uniaxially stretched film, and the biaxially stretched film is not particularly limited, and examples thereof include polyvinylidene chloride, nylon, an ethylene-vinyl alcohol copolymer, a polyvinyl alcohol, and the like. An adhesive applied by a dry lamination method or a hot melt lamination method can be used for attaching the sealant film.

In order to enhance the gas barrier properties, aluminum or an inorganic oxide such as silica or alumina can also be vapor-deposited on the biaxially-oriented polypropylene film, the intermediate layer, or the sealant film. As the vapor deposition method, a known method such as vacuum vapor deposition, sputtering, or ion plating may be adopted.

The biaxially-oriented polypropylene film of the present invention can be made suitable for a packaging material for green groceries such as vegetables, fruits, and flowers, by causing an antifogging agent such as fatty acid esters of polyhydric alcohols, amines of higher fatty acids, amides of higher fatty acids, amines of higher fatty acids, and ethylene oxide adducts of amides, to be contained in a range of 0.2 to 5% by mass.

When the film is used as a packaging film, the packaging film is often composed of a laminated film of a printed base film and a sealant film. There are three-sided bags, standing bags, gusset bags, and the like, and such bags can be manufactured by a known bag making machine. It is considered that a printing pitch shift occurs since the base of the film expands and contracts due to tension or heat applied to the film during the printing step. Eliminating defective products due to a printing pitch shift is important also in terms of effective use of resources, and is also important in order to increase purchasing motivation.

The present application claims the benefit of priority to Japanese Patent Application No. 2023-097939, No.2023-097940, and No. 2023-097941 filed on June 14, 2023. The entire contents of the specifications of Japanese Patent Application No. 2023-097939, No.2023-097940, and No. 2023-097941 filed on June 14, 2023 are hereby incorporated by reference.

EXAMPLES

Hereinafter, the present invention will be described in detail by way of Examples. The present invention is, of course, not limited to these Examples. The evaluation methods used in each Example and Comparative Example are as follows. In (2) to (4) below, various physical properties of the polypropylene resin were measured, and with respect to the polypropylene resin composition in which two kinds of polypropylene resins were used, the value obtained as a mass average of the physical property values of the respective polypropylene resins was used as the physical property value of the polypropylene resin composition. Meanwhile, in (1) below, with respect to the polypropylene resin composition in which two kinds of polypropylene resins were used, the melt flow rate in a state where the two kinds of polypropylene resins were blended was measured.

(1) Melt flow rate

The melt flow rate (MFR) was measured at a temperature of 230°C with a load of 2.16 kgf according to JIS K7210.

(2) Mesopentad fraction

The mesopentad fraction ([mmmm]%) was measured using $^{13}$C-NMR. The mesopentad fraction was calculated according to the method described in Zambelli et al., Macromolecules, Vol 6, p. 925 (1973). The $^{13}$C-NMR measurement was carried out at 110°C, with 200 mg of a sample being dissolved in an 8:2 mixed solution of o-dichlorobenzene and heavy benzene at 135°C, using AVANCE 500 manufactured by BRUKER.

(3) Amount of the component having a molecular weight of 100,000 or less

Using gel permeation chromatography (GPC), the molecular weights were determined as polypropylene-equivalent molecular weights on the basis of monodisperse polystyrene. When the baseline was not clear, a baseline was set in a range to the lowest position of the skirt, on the high molecular weight side, of an elution peak on the high molecular weight side closest to the elution peak of the standard substance.
The GPC measurement conditions are as follows.

Equipment: HLC-8321PC/HT manufactured by Tosoh Corporation
· Detector: RI
· Solvent: 1,2,4-trichlorobenzene+dibutylhydroxytoluene (0.05%)
· Column: TSKgel guard column HHR (30) HT (7.5 mm I.D. × 7.5 cm) × 1 + TSKgel GMHHR-H (20) HT (7.8 mm I.D. × 30 cm) × 3
· Flow rate: 1.0 mL/minute
· Injection volume: 0.3 mL
· Measurement temperature: 140°C

The mass proportion of the component having a molecular weight of 100,000 or less was obtained from the integral curve of the molecular weight obtained by GPC.

(4) Melting point and crystallization temperature

Heat measurement was performed using the Q1000 differential scanning calorimeter manufactured by TA Instruments. Approximately 5 mg was cut out from pellets and put in a measurement aluminum pan to be set in the differential scanning calorimeter. In a nitrogen atmosphere, temperature increase was performed at a temperature increase rate of 20°C/minute from 30°C to 230°C, and the temperature was maintained at 230°C for 5 minutes, to melt the resin. Then, temperature decrease was performed at a temperature decrease rate of - 10°C/minute, to 30°C, and the temperature was maintained at 30°C for 5 minutes. Then, temperature increase was performed at a temperature increase rate of 10°C/minute, to 230°C. The main peak temperature of an endothermic peak associated with melting and observed when the temperature increase was performed for the second time was regarded as the melting point. The main peak temperature of an exothermic peak observed when temperature decrease was performed from 230°C to 30°C was regarded as the crystallization temperature.

(5) Film thickness

The thickness of a film was measured using Millitron 1202D manufactured by Seiko EM.

(6) Thermomechanical analysis (TMA) measurement (measurement of the length of the film in the width direction from 30°C to 130°C)

A film was cut out such that the length in the width direction of the film was 40 mm and the length in the longitudinal direction of the film was 4 mm, and the cut-out film was set to the thermomechanical analyzer TMA-60 manufactured by Shimadzu Corporation such that the chuck width was 10 mm. Temperature increase was performed at a temperature increase rate of 10°C/minute from 30°C to 130°C with a measurement load of 0.5 g, and a length X in the width direction of the sample during temperature increase was continuously measured. The maximum value of the length of the chuck spacing during the temperature increase was defined as $X_1$ (mm), the minimum value of the length of the chuck spacing during the temperature increase was defined as $X_2$ (mm), and the percentage of $(X_1\text{-}10)/10$ $((X_1\text{-}X_0)/X_0)$ and the percentage of $(X_2\text{-}10)/10$ $((X_2\text{-}X_0)/X_0)$ were calculated.

(7) Thermomechanical analysis (TMA) measurement (measurement of temperature at 0.5% shrinkage)

A film was cut out such that the length in the width direction of the film was 40 mm and the length in the longitudinal direction of the film was 4 mm, and the cut-out film was set to the thermomechanical analyzer TMA-60 manufactured by Shimadzu Corporation such that the chuck width was 10 mm. Temperature increase was performed at a temperature increase rate of 10°C/minute from 30°C to 160°C with a measurement load of 0.5 g, and the length in the width direction of the sample during temperature increase was continuously measured. From the measurement result, the lowest temperature in the temperatures at which the length in width direction of the sample was 9.95 mm or less was regarded as the temperature at 0.5% shrinkage.

(8) Loss elastic modulus by dynamic viscoelasticity measurement (DMA)

A film was cut out such that the length in the width direction of the film was 40 mm and the length in the longitudinal direction of the film was 4 mm, and the cut-out film was set to RSA-G2 manufactured by TA Instruments Japan Inc., such that the chuck width was 10 mm. Temperature increase was performed at a temperature increase rate of 5°C/minute from -60°C to 160°C in a nitrogen atmosphere with a measurement load of 10 g at a frequency of 10 Hz, and the loss elastic modulus during temperature increase in the width direction of the film was measured. A graph having a horizontal axis representing temperature and a vertical axis representing loss elastic modulus was drawn, and the maximum value E" (A) of the loss elastic modulus from -25°C to 25°C, the minimum value E" (B) of the loss elastic modulus from 25°C to 75°C, and the maximum value E" (C) of the loss elastic modulus at 100°C or more were each obtained. The value of E" (C)/E" (A) and the value of E" (B)/E" (C) were also calculated.

(9) Storage elastic modulus by dynamic viscoelasticity measurement (DMA)

The storage elastic modulus in the longitudinal direction and the width direction of the film was measured by the following method. A film was cut out such that the length in the measurement direction was 40 mm and the length in the direction perpendicular thereto was 4 mm, and the film was set to RSA-G2 manufactured by TA Instruments Japan Inc., such that the chuck width was 10 mm. Temperature increase was performed at a temperature increase rate of 5°C/minute from -60°C to 160°C in a nitrogen atmosphere with a measurement load of 10 g at a frequency of 10 Hz, and the storage elastic modulus at 23°C, 120°C, 140°C, and 150°C was obtained. From the obtained values, the sum of the storage elastic modulus at 23°C and the storage elastic modulus at 140°C in the longitudinal direction and the sum of the storage elastic modulus at 23°C and the storage elastic modulus at 140°C in the width direction were calculated.

(10) Stress at 5% elongation (F5)

The stress at 5% elongation (F5) during a tensile test in the longitudinal direction and the width direction of the film was measured at 23°C according to JIS K7127. A film was cut out such that the length in the measurement direction was 200 mm and the length in the direction perpendicular thereto was 15 mm, and the film was set to a tensile tester (dual column desktop tester Instron 5965 manufactured by Instron Japan Company Limited) such that the chuck width was 100 mm. Then, a tensile test was performed at a tensile rate of 200 mm/minute. The stress at 5% elongation based on the obtained strain-stress curve was regarded as F5.

(11) Heat shrinkage rate

The heat shrinkage rate at 120°C in the longitudinal direction and the width direction of the film was measured by the following method according to JIS Z1712. A film was cut out such that the length in the measurement direction was 200 mm and the length in the direction perpendicular thereto was 20 mm, and the cut-out film was hung in a hot air oven set at 120°C, and was heated for 5 minutes. The length after heating was measured, and the heat shrinkage rate at 120°C was obtained as the ratio of the shrunk length to the original length.

In addition, the heat shrinkage rate at 150°C was obtained by the same measurement method as that for the heat shrinkage rate at 120°C, except that the film was hung in a hot air oven set at 150°C.

(12) Evaluation of appearance of heat-sealed portion

An adhesive (TM329/CAT8B manufactured by Toyo-Morton, Ltd.) was applied to the obtained film, then, as a sealant film, an unstretched polypropylene film (P1128 manufactured by TOYOBO Co., Ltd.) having a thickness of 30 μm was dry-laminated on a metal roll heated at 60°C, and then, the resultant matter was subjected to aging at 40°C for 3 days, whereby a laminated body for evaluation was obtained.

Sealant films of the laminated bodies were heat-sealed by a heat sealer so as to form a 130 mm × 180 mm three-side sealed bag, whereby a three-side sealed bag was produced. A pressure of 0.2 MPa was applied for 1 second, the width of the sealing bar was 10 mm, and the heat sealing temperature was 150°C. Appearance of wrinkles at the heat-sealed portion was visually evaluated.

A: no wrinkle can be confirmed in the heat-sealed portion both in the width direction and the longitudinal direction of the film.

B: a wrinkle can be confirmed in the heat-sealed portion in only one of the width direction and the longitudinal direction of the film.

C: a wrinkle can be confirmed in the heat-sealed portion both in the width direction and the longitudinal direction of the film.

(13) Flatness evaluation (flatness after 130°C treatment)

A sample was cut out such that the lengths in the width direction and the longitudinal direction of the film are both 200 mm, and this sample was used as an evaluation sample. The sample was hung in a hot air oven set at 130°C, and was heated for 5 minutes. After being cooled to room temperature, the film was placed on a black mounting sheet, and the film surface was observed under fluorescent lighting at an oblique angle of 45 degrees.

A: no heat wrinkle of 5 mm or more and no large waviness are present.

B: no heat wrinkle can be confirmed but a large waviness of 5 mm or more can be confirmed.

C: a heat wrinkle can be confirmed.

(Example 1)

As a polypropylene resin, 80 parts by mass of propylene homopolymer PP-1 (SUMITOMO NOBLEN FLX80E4 manufactured by SUMITOMO CHEMICAL COMPANY, LIMITED.) in which the MFR was 7.5 g/10 minutes, [mmmm] was 98.9%, the melting point was 162.5°C, the crystallization temperature was 116.2°C, and the amount of the component having a molecular weight of 100,000 or less was 40.5% by mass, and 20 parts by mass of propylene homopolymer PP-2 (EL80F5 manufactured by SUMITOMO CHEMICAL COMPANY, LIMITED.) in which the MFR was 11 g/10 minutes, [mmmm] was 98.8%, the melting point was 161.5°C, the crystallization temperature was 116.5°C, and the amount of the component having a molecular weight of 100,000 or less was 53.1% by mass, were blended to be used.

The mixture was extruded into a sheet form from a T-die at 250°C, brought into contact with a cooling roll set at 20°C, and put into a water tank set at 20°C as it was. Thereafter, the sheet was stretched 4.5 times in the longitudinal direction with two pairs of rolls at 142°C, then both ends were pinched with a clip, and the sheet was guided into a hot air oven and preheated at 172°C. Then, the sheet was stretched 12.7 times in the width direction at 162°C. Immediately after the stretching in the width direction, the sheet was heat-treated at 170°C while being gripped by the clip without being relaxed. Then, the sheet was heat-treated at 140°C and relaxed at a relaxation rate of 3% in the width direction. Lastly, the sheet was cooled at room temperature (23°C). The thickness of the film obtained in this manner was 20.0 $\mu$m.

The manufacturing conditions of the film are shown in Table 1, and the physical properties of the film are shown in Table 2. As shown in Table 2, the film of Example 1 was excellent in flatness after being treated at 130°C, and thus was suitable for applications that require heat resistance such as release films and process paper. In addition, with respect to a three-side sealed bag manufactured by using the film of Example 1, heat-seal-appearance was good, stiffness of the bag product was excellent, and thus, handleability was good.

(Examples 2 to 7)

In Examples 2 to 7, the films were manufactured by the same manufacturing method as that in Example 1 except that the manufacturing conditions of the films were changed to the manufacturing conditions shown in Table 1. The manufacturing conditions of the films are shown in Table 1, and the physical properties of the films are shown in Table 2. As shown in Table 2, the films of Examples 2 to 7 were all excellent in flatness after being treated at 130°C, and thus were suitable for applications that require heat resistance such as release films and process paper. In addition, with respect to all three-side sealed bags manufactured by using the films of Examples 2 to 7, heat-seal-appearance was good, stiffness of the bag product was excellent, and thus, handleability was good.

Using the biaxially-oriented polypropylene films produced in Examples 1 to 7, laminated bodies having the configurations of (1) to (9) below were produced. Then, using the laminated bodies of (1) to (9), 130 mm × 180 mm packaging bags of a three-side sealed type, a pillow type, and a gusset type were produced. Even when the biaxially-oriented polypropylene film of any of Examples was used, a packaging bag having good sealing strength and good appearance of the sealed portion was able to be produced.

(1) Biaxially-oriented PP film layer/printed layer/adhesive layer/linear-low-density PE film sealant layer.
(2) Biaxially-oriented PP film layer/printed layer/adhesive layer/unstretched PP film sealant layer.
(3) Biaxially-oriented PET film layer/printed layer/adhesive layer/biaxially-oriented PP film layer/adhesive layer/unstretched PP film sealant layer.

(4) Biaxially-oriented PET film layer/printed layer/adhesive layer/biaxially-oriented PP film layer/adhesive layer/-linear-low-density PE film sealant layer.

(5) Biaxially-oriented PP film layer/anchor coat layer/inorganic thin film layer/inorganic thin film protection layer/-printed layer/adhesive layer/linear-low-density PE film sealant layer.

(6) Linear-low-density PE film sealant layer/adhesive layer/biaxially-oriented PP film layer/anchor coat layer/inorganic thin film layer/adhesive layer/linear-low-density PE film sealant layer.

(7) Linear-low-density PE film layer/adhesive layer/biaxially-oriented PP film layer/anchor coat layer/inorganic thin film layer/adhesive layer/linear-low-density PE film layer/low-density PE/paper/low-density PE/linear-low-density PE film sealant layer.

(8) Biaxially-oriented PP film layer/anchor coat layer/inorganic thin film layer/inorganic thin film protection layer/-printed layer/adhesive layer/unstretched PP film sealant layer.

(9) Biaxially-oriented PET film layer/inorganic thin film layer/inorganic thin film protection layer/printed layer/PU-based adhesive layer/biaxially-oriented PP film layer/adhesive layer/easy-peel-type unstretched PP film sealant layer.

(Comparative Examples 1 to 5)

In Comparative Examples 1 to 5, the films were manufactured by the same manufacturing method as that in Example 1 except that the manufacturing conditions of the films were changed to the manufacturing conditions shown in Table 1. The manufacturing conditions of the films are shown in Table 1, and physical properties of the films are shown in Table 2. In Comparative Example 1 and Comparative Example 9 described later, in a first stage of heat treatment, heat treatment was performed at 100°C, which means that cooling was substantially performed in the first stage of heat treatment.

(Comparative Example 6)

The film was manufactured by the same manufacturing method as that in Example 1 except that, as a polypropylene resin, only PP-3 (WF836DG3 manufactured by SUMITOMO CHEMICAL COMPANY, LIMITED.) in which the MFR was 7 g/10 minutes, [mmmm] was 95.2%, the melting point was 157.8°C, the crystallization temperature was 111.2°C, the content of ethylene monomer was 0.4 mol%, and the amount of the component having a molecular weight of 100,000 or less was 39.1% by mass, was used, and that the manufacturing conditions of the film were changed to the manufacturing conditions shown in Table 1. The manufacturing conditions of the film are shown in Table 1, and the physical properties of the film are shown in Table 2.

(Comparative Example 7)

The film was manufactured by the same manufacturing method as that in Example 1 except that the manufacturing conditions of the film were changed to the manufacturing conditions shown in Table 1. Immediately after the stretching in the width direction, the film was cooled (heat-treated) at 120°C while being gripped by a clip, and then, was re-stretched 1.1 times in the width direction at 177°C. The manufacturing conditions of the film are shown in Table 1, and the physical properties of the film are shown in Table 2.

(Comparative Example 8)

The film was manufactured by the same method as in Example 1 except that the film was: guided into a hot air oven and preheated at 177°C; then, stretched 6.8 times in the width direction at 169°C; immediately after the stretching in the width direction, heat-treated at 170°C while being gripped by a clip; and subjected to 16% relaxation in the width direction. The manufacturing conditions of the film are shown in Table 1, and the physical properties of the film are shown in Table 2.

(Comparative Example 9)

The film was manufactured by the same method as in Example 1 except that the film was: guided into a hot air oven and preheated at 170°C; stretched 6.0 times in the width direction at 162°C as a first stage and subsequently stretched 1.36 times at 145°C as stretching in a second stage, thereby being stretched a total of 8.16 times; immediately after the stretching in the width direction, heat-treated at 100°C while being gripped by a clip without being relaxed; and then, heat-treated at 165°C without being relaxed. The manufacturing conditions of the film are shown in Table 1, and the physical properties of the film are shown in Table 2.

In Comparative Examples 1 to 9, at least one of the temperature at 0.5% shrinkage, the storage elastic modulus in the longitudinal direction at 23°C, and the storage elastic modulus in the width direction at 23°C was outside a predetermined range. Thus, the films of Comparative Examples 1 to 9 were all inferior in flatness after treatment at 130°C. In Comparative Example 6, the mesopentad fraction of PP-3 was too low, and thus the film was inferior in flatness. Three-side sealed bags manufactured by using the films of Comparative Examples 1 to 9 were all inferior in heat-seal appearance.

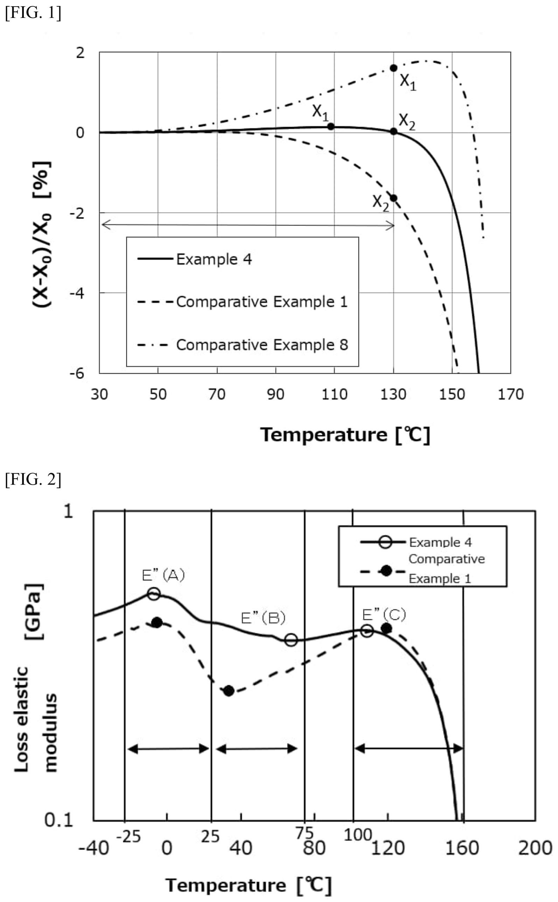

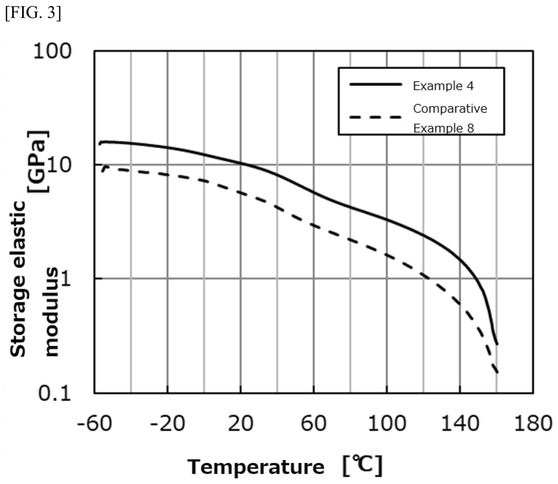

FIG. 1 shows a relationship between temperature and the length of the film in the width direction in Example 4, Comparative Example 1, and Comparative Example 8, and strictly speaking, a relationship between temperature and the percentage of $(X-X_0)/X_0$ (X: the length of the film in the width direction at the temperature, $X_0$:10 (mm)). FIG. 2 shows a relationship between temperature and the loss elastic modulus in Example 4 and Comparative Example 1. FIG. 3 shows a relationship between temperature and the storage elastic modulus in Example 4 and Comparative Example 8.

[Table 1]

| | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|---|
| Raw material polypropylene resin | PP-1 | 80 | 80 | 0 | 80 | 80 | 80 | 80 | 80 | 80 | 80 | 80 | 80 | - | 80 | 80 | |
| | PP-2 | 20 | 20 | 20 | 20 | 20 | 20 | 20 | 20 | 20 | 20 | 20 | 20 | - | 20 | 20 | |
| | PP-3 | - | - | - | - | - | - | - | - | - | - | - | - | 100 | - | - | - |
| Polypropylene resin composition | mmmm (%) | 98.8 | 98.8 | 98.8 | 98.8 | 98.8 | 98.8 | 98.8 | 98.8 | 98.8 | 98.8 | 98.8 | 98.8 | 95.2 | 98.8 | 98.8 | 98.8 |
| | Melting temperature (°C) | 162.3 | 162.3 | 162.3 | 162.3 | 162.3 | 162.3 | 162.3 | 162.3 | 162.3 | 162.3 | 162.3 | 162.3 | 157.8 | 162.3 | 162.3 | 162.3 |
| | Crystallization temperature (°C) | 116.3 | 116.3 | 116.3 | 116.3 | 116.3 | 116.3 | 116.3 | 116.3 | 116.3 | 116.3 | 116.3 | 116.3 | 111.2 | 116.3 | 116.3 | 116.3 |
| | Melt flow rate (g/10 minutes) | 8.5 | 8.5 | 8.5 | 8.5 | 8.5 | 8.5 | 8.5 | 8.5 | 8.5 | 8.5 | 8.5 | 8.5 | 7 | 8.5 | 8.5 | 8.5 |
| | Amount of component having molecular weight of 100,000 or less (% by mass) | 43.0 | 43.0 | 43.0 | 43.0 | 43.0 | 43.0 | 43.0 | 43.0 | 43.0 | 43.0 | 43.0 | 43.0 | 39.1 | 43.0 | 43.0 | 43.0 |
| Extrusion step | Extrusion temperature (°C) | 250 | 250 | 250 | 250 | 250 | 250 | 250 | 250 | 250 | 250 | 250 | 250 | 250 | 250 | 250 | 250 |
| | Cooling: temperature (°C) | 20 | 20 | 20 | 20 | 20 | 20 | 20 | 20 | 20 | 20 | 20 | 20 | 20 | 20 | 20 | 20 |

EP 4 729 569 A1

| | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|---|
| Longitudi-nal-direction stretching step | Longitudi-nal-direction stretching temperature (°C) | 142 | 142 | 147 | 147 | 142 | 142 | 142 | 142 | 142 | 142 | 142 | 142 | 130 | 147 | 142 | 142 |
| | Longitudinal-direction stretching ratio (times) | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 | 4.5 |
| Preheating step | Preheating temperature (°C) | 172 | 172 | 170 | 170 | 170 | 170 | 170 | 170 | 170 | 170 | 170 | 170 | 165 | 170 | 177 | 170 |
| Width-direc-tion stretch-ing step | Width-direc-tion stretch-ing tem-perature (°C) | 162 | 164 | 162 | 162 | 162 | 164 | 164 | 162 | 162 | 164 | 164 | 164 | 157 | 165 | 169 | 162/145 |
| | Width-direc-tion stretch-ing: ratio (times) | 12.7 | 13.7 | 14.3 | 13.7 | 13.5 | 13.1 | 13.7 | 13.7 | 13.3 | 13.6 | 13.4 | 12.5 | 10.3 | 10.9 | 6.8 | 6.0/1.36 |

EP 4 729 569 A1

22

(continued)

| | | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|---|
| Heat treatment step Cooling step | Heating temperature in former heat treatment step (°C) | 170 | 170 | 168 | 170 | 170 | 170 | 170 | 100 | 165 | 165 | 155 | 157 | 166 | 120 | 170 | 100 |
| | Relaxation rate in former heat treatment step (%) | 0 | 0 | 0 | 0 | 0 | 0 | 0 | 0 | 0 | 0 | 3 | 10 | 0 | 0 | 16 | 0 |
| | Heating temperature in latter heat treatment step (°C) | 140 | 140 | 140 | 140 | 120 | 140 | 160 | 165 | 165 | 140 | 140 | 140 | 140 | 177 | - | 165 |
| | Relaxation rate in latter heat treatment step (%) | 3 | 3 | 3 | 3 | 3 | 3 | 3 | 3 | 3 | 3 | 0 | 0 | 3 | stretching 1.1 times | - | 0 |
| | Cooling temperature (°C) | 23 | 23 | 23 | 23 | 23 | 23 | 23 | 100 | 23 | 23 | 23 | 23 | 23 | 23 | 100 | 23 |

[Table 2]

| Item | unit | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|---|
| Thickness | µm | 20.0 | 21.0 | 17.0 | 16.3 | 15.6 | 25.1 | 16.9 | 16.7 | 16.4 | 26.0 | 25.9 | 27.6 | 16.1 | 20.6 | 25.7 | 20.4 |
| $(X_1-X_0)/X_0$ | % | 0.11 | 0.15 | 0.11 | 0.13 | 0.14 | 0.08 | 0.10 | 0.01 | 0.12 | 0.03 | 0.08 | 0.30 | 0.16 | 0.16 | 1.70 | 0.01 |
| $(X_2-X_0)/X_0$ | % | -0.28 | 0.00 | -0.13 | 0.00 | 0.00 | -0.21 | -0.16 | -1.65 | -0.75 | -0.98 | -1.35 | 0.00 | -0.84 | -0.60 | 0.00 | -2.91 |
| Temperature at 0.5% shrinkage | °C | 134 | 146 | 138 | 133 | 140 | 136 | 139 | 109 | 125 | 116 | 116 | 143 | 126 | 128 | 158 | 92 |
| Maximum value E' (A) of loss elastic modulus at -25°C to 25°C | GPa | 0.50 | 0.53 | 0.55 | 0.55 | 0.50 | 0.51 | 0.49 | 0.44 | 0.50 | 0.49 | 0.53 | 0.44 | 0.47 | 0.51 | 0.34 | 0.38 |
| Minimum value E' (B) of loss elastic modulus at 25°C to 75°C | GPa | 0.29 | 0.32 | 0.31 | 0.38 | 0.30 | 0.32 | 0.28 | 0.23 | 0.25 | 0.25 | 0.23 | 0.22 | 0.23 | 0.22 | 0.19 | 0.24 |
| Maximum value E' (C) of loss elastic modulus at 100°C to 160°C | GPa | 0.43 | 0.37 | 0.40 | 0.41 | 0.43 | 0.39 | 0.37 | 0.46 | 0.43 | 0.44 | 0.44 | 0.26 | 0.22 | 0.38 | 0.19 | 0.42 |
| E"(C)/E"(A) | - | 0.86 | 0.70 | 0.73 | 0.75 | 0.86 | 0.76 | 0.76 | 1.05 | 0.86 | 0.90 | 0.83 | 0.59 | 0.47 | 0.75 | 0.56 | 1.09 |
| E"(B)/E"(C) | - | 0.67 | 0.85 | 0.77 | 0.92 | 0.70 | 0.82 | 0.76 | 0.50 | 0.58 | 0.57 | 0.52 | 0.85 | 1.05 | 0.58 | 0.97 | 0.57 |

| Item | unit | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|---|
| Storage elastic modulus at 23°C (longitudinal direction) | GPa | 3.8 | 3.1 | 3.0 | 3.3 | 3.3 | 3.1 | 3.1 | 3.3 | 3.7 | 2.7 | 2.9 | 3.0 | 2.6 | 2.9 | 3.4 | 2.8 |
| Storage elastic modulus at 23°C (width direction) | GPa | 9.4 | 8.9 | 9.2 | 10.0 | 10.5 | 8.9 | 8.9 | 10.3 | 9.6 | 10.1 | 10.2 | 7.9 | 7.3 | 8.4 | 5.5 | 9.2 |
| Storage elastic modulus at 120°C (longitudinal direction) | GPa | 1.1 | 0.8 | 0.8 | 0.8 | 0.9 | 0.9 | 0.8 | 0.8 | 1.0 | 0.8 | 0.8 | 0.9 | 0.4 | 0.7 | 0.8 | 0.8 |
| Storage elastic modulus at 120°C (width direction) | GPa | 2.7 | 2.3 | 2.4 | 2.4 | 2.9 | 2.3 | 2.4 | 2.7 | 2.8 | 2.5 | 2.5 | 2.0 | 2.0 | 2.3 | 1.1 | 2.4 |
| Storage elastic modulus at 140°C (longitudinal direction) | GPa | 0.6 | 0.5 | 0.5 | 0.5 | 0.5 | 0.5 | 0.5 | 0.5 | 0.6 | 0.5 | 0.5 | 0.5 | 0.1 | 0.4 | 0.4 | 0.4 |

(continued)

| Item | unit | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|---|
| Storage elastic modulus at 140°C (width direction) | GPa | 1.6 | 1.4 | 1.5 | 1.5 | 1.8 | 1.4 | 1.5 | 1.6 | 1.7 | 1.5 | 1.4 | 1.2 | 1.2 | 1.3 | 0.6 | 1.3 |
| Storage elastic modulus at 150°C (longitudinal direction) | GPa | 0.4 | 0.3 | 0.3 | 0.3 | 0.3 | 0.3 | 0.3 | 0.3 | 0.3 | 0.3 | 0.3 | 0.3 | 0.0 | 0.2 | 0.3 | 0.3 |
| Storage elastic modulus at 150°C (width direction) | GPa | 1.0 | 0.9 | 0.9 | 1.0 | 1.2 | 0.9 | 1.0 | 1.0 | 1.1 | 0.9 | 0.9 | 0.8 | 0.8 | 0.9 | 0.4 | 0.8 |
| Sum of storage elastic modulus at 23°C and storage elastic modulus at 140°C (longitudinal direction) | GPa | 4.4 | 3.6 | 3.5 | 3.8 | 3.8 | 3.6 | 3.6 | 3.8 | 4.3 | 3.2 | 3.4 | 3.5 | 2.7 | 3.3 | 3.8 | 3.2 |

(continued)

| Item | unit | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|---|
| Sum of storage elastic modulus at 23°C and storage elastic modulus at 140°C (width direction) | GPa | 11.0 | 10.3 | 10.7 | 11.5 | 12.3 | 10.3 | 10.4 | 11.9 | 11.3 | 11.6 | 11.6 | 9.1 | 8.5 | 9.7 | 6.1 | 10.5 |
| F5 at 23°C (longitudinal direction) | MPa | 49 | 50 | 46 | 48 | 46 | 50 | 46 | 47 | 46 | 50 | 51 | 49 | 36 | 50 | 47 | 48 |
| F5 at 23°C (width direction) | MPa | 166 | 164 | 187 | 177 | 175 | 163 | 161 | 191 | 178 | 166 | 173 | 146 | 113 | 164 | 88 | 175 |
| Heat shrinkage rate at 120°C (longitudinal direction) | % | 1.2 | 1.2 | 1.2 | 1.5 | 1.7 | 1.5 | 1.3 | 1.2 | 1.7 | 1.7 | 1.5 | 1.3 | 2.7 | 0.8 | 1.3 | 1.0 |
| Heat shrinkage rate at 120°C (width direction) | % | 0.0 | 0.2 | 0.5 | 0.0 | 0.3 | 0.3 | 0.5 | 2.5 | 1.4 | 1.2 | 2.2 | 0.2 | 1.5 | 0.5 | -0.7 | 3.0 |

(continued)

| Item | unit | Example 1 | Example 2 | Example 3 | Example 4 | Example 5 | Example 6 | Example 7 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|---|---|---|---|---|---|---|
| Heat shrinkage rate at 150°C (longitudinal direction) | % | 3.5 | 3.5 | 4.3 | 4.2 | 3.8 | 3.8 | 2.3 | 3.2 | 3.2 | 3.8 | 4.3 | 3.3 | 13.3 | 5.0 | 3.7 | 3.5 |
| Heat shrinkage rate at 150°C (width direction) | % | 6.0 | 7.8 | 8.3 | 7.5 | 7.2 | 7.3 | 6.2 | 12.0 | 9.8 | 8.7 | 11.2 | 8.4 | 21.5 | 6.0 | 1.3 | 24.0 |
| Appearance of heat-scaled portion | - | A | A | A | A | A | A | A | C | C | C | C | C | C | C | C | C |
| Flatness after 130°C treatment | - | A | A | A | A | A | A | A | C | C | C | C | B | C | C | B | C |

**Claims**

1. A biaxially-oriented polypropylene film, wherein

   in thermomechanical analysis, when temperature increase is performed at a temperature increase rate of 10°C/minute from 30°C to 160°C, a temperature at which a length of the biaxially-oriented polypropylene film in a width direction becomes $0.9950X_0$ or less where $X_0$ represents a value of the length in the width direction at 30°C is 129°C or more,
   a storage elastic modulus of the biaxially-oriented polypropylene film in a longitudinal direction at 23°C is 2.0 GPa or more, and
   a storage elastic modulus of the biaxially-oriented polypropylene film in the width direction at 23°C is 8.0 GPa or more.

2. The biaxially-oriented polypropylene film according to claim 1, wherein

   a sum of the storage elastic modulus in the longitudinal direction at 23°C and a storage elastic modulus of the biaxially-oriented polypropylene film in the longitudinal direction at 140°C is 3.0 GPa or more, and
   a sum of the storage elastic modulus in the width direction at 23°C and a storage elastic modulus of the biaxially-oriented polypropylene film in the width direction at 140°C is 8.9 GPa or more.

3. The biaxially-oriented polypropylene film according to claim 1 or 2, wherein

   a storage elastic modulus of the biaxially-oriented polypropylene film in the longitudinal direction at 120°C is 0.5 GPa or more, and
   a storage elastic modulus of the biaxially-oriented polypropylene film in the width direction at 120°C is 2.1 GPa or more.

4. The biaxially-oriented polypropylene film according to claim 1 or 2, wherein

   a heat shrinkage rate of the biaxially-oriented polypropylene film in the longitudinal direction at 120°C is 2.5% or less, and
   a heat shrinkage rate of the biaxially-oriented polypropylene film in the width direction at 120°C is 1.1% or less.

5. The biaxially-oriented polypropylene film according to claim 1 or 2, wherein a stress at 5% elongation of the biaxially-oriented polypropylene film in the width direction at 23°C is 150 MPa or more.

6. The biaxially-oriented polypropylene film according to claim 1 or 2, wherein a polypropylene resin composition constituting the biaxially-oriented polypropylene film has a mesopentad fraction of 97.0% or more.

7. The biaxially-oriented polypropylene film according to claim 1 or 2, wherein a polypropylene resin composition constituting the biaxially-oriented polypropylene film has a crystallization temperature of 105°C or more and a melting point of 158°C or more.

8. The biaxially-oriented polypropylene film according to claim 1 or 2, wherein a polypropylene resin composition constituting the biaxially-oriented polypropylene film has a melt flow rate of 4.0 g/10 minutes or more.

9. The biaxially-oriented polypropylene film according to claim 1 or 2, wherein a polypropylene resin composition constituting the biaxially-oriented polypropylene film contains 35% by mass or more of a component having a molecular weight of 100,000 or less.

[FIG. 1]

[FIG. 2]

[FIG. 3]

## INTERNATIONAL SEARCH REPORT

| International application No. |
| --- |
| **PCT/JP2024/021366** |

**A.    CLASSIFICATION OF SUBJECT MATTER**

*C08J 5/18*(2006.01)i
FI:    C08J5/18 CES

According to International Patent Classification (IPC) or to both national classification and IPC

**B.    FIELDS SEARCHED**

Minimum documentation searched (classification system followed by classification symbols)

C08J5/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2022-190664 A (TOYOBO CO., LTD.) 26 December 2022 (2022-12-26) entire text | 1-9 |
| A | WO 2021/193510 A1 (TOYOBO CO., LTD.) 30 September 2021 (2021-09-30) entire text | 1-9 |
| A | JP 2022-122963 A (TOYOBO CO., LTD.) 23 August 2022 (2022-08-23) entire text | 1-9 |
| A | WO 2021/261313 A1 (TOYOBO CO., LTD.) 30 December 2021 (2021-12-30) entire text | 1-9 |

| ☐ Further documents are listed in the continuation of Box C. | ☑ See patent family annex. |
| --- | --- |

| | |
| --- | --- |
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **14 August 2024** | **27 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

INTERNATIONAL SEARCH REPORT
Information on patent family members

International application No.

**PCT/JP2024/021366**

| Patent document cited in search report | | | Publication date (day/month/year) | Patent family member(s) | | | Publication date (day/month/year) |
|---|---|---|---|---|---|---|---|
| JP | 2022-190664 | A | 26 December 2022 | US 2023/0203257 A1 entire text | | | |
| WO | 2021/193510 | A1 | 30 September 2021 | TW 202140647 A | | | |
| JP | 2022-122963 | A | 23 August 2022 | US 2023/0167255 A1 entire text | | | |
| WO | 2021/261313 | A1 | 30 December 2021 | US 2023/0235135 A1 entire text | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020196602 A
- WO 2021070671 A
- WO 2020137789 A
- JP 2023097939 A
- JP 2023097940 A
- JP 2023097941 A

**Non-patent literature cited in the description**

- **MOTOWO TAKAYANAGI**. Kesshousei Koubunshi no Ondo Bunsan (provisional translation: Temperature Dispersion of Crystalline Polymers). KOUBUNSHI, The Society of Polymer Science, 1961, vol. 10, 289-295
- **ZAMBELLI et al.** *Macromolecules*, 1973, vol. 6, 925